# EUROPÄISCHE PATENTSCHRIFT

(11) **EP 2 820 026 B1**
(45) Veröffentlichungstag und Bekanntmachung des Hinweises auf die Patenterteilung: **13.01.2016**
(21) Anmeldenummer: 13704359.2
(22) Anmeldetag: 12.02.2013
(51) Int. Cl.: C07F 9/32, C07B 59/00

(54) **VERFAHREN ZUR HERSTELLUNG VON PHOSPHINSÄUREESTERN**
PROCESS FOR PRODUCING PHOSPHINIC ACID ESTERS
PROCÉDÉ DE PRÉPARATION D'ESTERS D'ACIDE PHOSPHINIQUE

(30) Priorität: 02.03.2012 DE 102012004068
(43) Veröffentlichungstag der Anmeldung: 07.01.2015
(73) Patentinhaber: Merck Patent GmbH, 64293 Darmstadt (DE)
(72) Erfinder: IGNATYEV, Nikolai (Mykola), 47058 Duisburg (DE); SCHULTE, Michael, 65474 Bischofsheim (DE); JABLONKA, Christoph Alexander, 40477 Duesseldorf (DE); KOPPE, Karsten, 45768 Marl-Polsum (DE); FRANK, Walter, 42329 Wuppertal (DE)
(86) Internationale Anmeldenummer: PCT/EP2013/000408
(87) Internationale Veröffentlichungsnummer: WO 2013/127493

(56) Entgegenhaltungen:
- WO-A1-2005/049555
- NN V PAVLENKO: "Esters of bis(perfluoroalkyl)phosphinic acids", JOURNAL OF GENERAL CHEMISTRY USSR, CONSULTANTS BUREAU, NEW YORK, NY, US, Bd. 3, Nr. 59, 20. August 1989 (1989-08-20), Seiten 474-476, XP002104254, ISSN: 0022-1279 in der Anmeldung erwähnt

## Beschreibung

Gegenstand der Erfindung ist ein Verfahren zur Herstellung von Phosphinsäurealkylestern, Phosphinsäurealkenylestern, Phosphinsäurealkinylestern oder Phosphinsäurephenylestern durch Reaktion eines entsprechenden Phosphinoxids mit einem Alkohol oder Phenol in Gegenwart von Alkalimetallfluorid oder Tetraalkylammoniumfluorid.

Alkylester von Bis(alkyl)phosphinsäuren sind bekannte Flammschutzmittel und Hilfsstoffe zur Reduktion von Viskositäten. Die Alkylierungskraft der Bis(alkyl)phosphinsäurealkylester kann durch Austausch der Alkylgruppe durch teilfluorierte Alkylgruppen oder perfluorierte Alkylgruppe erhöht werden. Der Methylester der Bis(heptafluorpropyl)phosphinsäure ist nach N. V. Pavlenko et al, J. Gen. Chem. USSR (Engl. Transl.), 59, 3, 1989, 474-476 in der Lage, die schwache Base 2-Trifluormethylbenzothiazol bei 20°C quantitativ zu methylieren.

Der Methylester der Bis(pentafluorethyl)phosphinsäure ist nach N. V. Ignat'ev, J. Fluorine Chem., 130, 2009, 1183-1191 in der Lage, das Chlorid oder Bromid eines organischen Salzes mit Chlorid- oder Bromid-Anion zu methylieren. Es entstehen bei dieser Alkylierungsreaktion auch organische Salze mit Bis(pentafluorethyl)phosphinat-Anionen.

Der Methylester der Bis(trifluormethyl)phosphinsäure kann beispielsweise durch Alkylierung von Quecksilber bis(trifluormethyl)phosphinat mit Methyliodid hergestellt werden (A. B. Burg et al, Inorg. Chem., 8, 5,1969, 1199-1201).

Alkylester der Bis(heptafluorpropyl)phosphinsäure können beispielsweise durch Reaktion von Silber bis(heptafluorpropyl)phosphinat mit Alkyliodiden hergestellt werden (N.V. Pavlenko et al, J. Gen. Chem. USSR (Engl. Transl), 59, 3, 1989, 474-476).

Alkylester von Bis(perfluoralkyl)phosphinsäuren können auch durch Alkoholyse von Bis(perfluoralkyl)phosphinsäurechloriden in Gegenwart einer organischen Base, beispielsweise in Gegenwart von Trimethylamin, hergestellt werden (R.G. Cavell et al, Inorg. Chem., 18, 10,1979, 2901-2908). Die Alkoholyse gelingt jedoch nicht in zufriedenstellender Ausbeute mit Methanol.

Auch ohne Gegenwart von Base ist die Methanolyse des Bis(perfluoralkyl)phosphinsäurechlorids nicht zufriedenstellend. N.V. Pavlenko et al, J.Gen.Chem. USSR (Engl. Transl), 59, 3, 1989, 474-476 postuliert, dass der intermediär entstehenden Methylester mit Methanol zum Dimethylether abreagiert und die Bis(perfluoralkyl)phosphinsäure entsteht.

Alkylester von Bis(perfluoralkyl)phosphinsäuren können auch durch Reaktion von Perfluoralkyliodiden mit Alkylphosphaten, (AlkylO)₃P=O, bei Temperaturen von 60°C in Gegenwart von Zink/Kupfer und sich anschließender sauerer Hydrolyse hergestellt werden (S. Benefice-Malouet et al, J. Fluorine Chem., 30, 1985, 171-188).

Im Patent US 2003-189193 wird ein Verfahren zur Herstellung von Methylestern von Bis(perfluoralkyl)phosphinsäuren durch Umwandlung von Perfluoralkyliodiden zu Grignard-Reagentien (R_{F}MgBr) bei Temperaturen unter -45°C und deren Reaktion mit POCl₃ und anschließender Reaktion mit Methanol beschrieben.

Nach wie vor besteht ein Bedarf, diese interessante Klasse an Alkylierungsmitteln alternativ zu herkömmlichen Methoden herzustellen.

Aufgabe der Erfindung ist daher ein alternatives oder verbessertes Verfahren zur Herstellung von Alkylestern von Phosphinsäuren zu entwickeln, das den Anforderungen einer großtechnischen wirtschaftlichen Synthese gerecht wird.

Bisher ist es bekannt, dass Tris(perfluoralkyl)phosphinoxide mit Alkoholen Komplexe ausbilden (V. Ya. Semenii et al, Zh. Obshchei Khim. (Russ), 48, 6, 1978, 1325-1331). Derartige Komplexe zersetzen sich bei Erwärmen über 40°C und bilden unterschiedliche Zersetzungsprodukte. Eine Isolierung von Alkylestern einer Bis(perfluoralkyl)phosphinsäure wird nicht beschrieben. Vermutet wird auch hier eine schnelle Abreaktion der Alkylester in Gegenwart von Alkohol unter Ausbildung der Bis(perfluoralkyl)phosphinsäure.

Ein ähnliches Ergebnis wurde auch von N.V. Pavlenko et al, J. Gen. Chem. USSR (Engl.Transl.), 59, 3, 1989, 474-476 beobachtet. Bei der Reaktion von Bis(heptafluorpropyl)phosphinoxid mit Methanol wurden lediglich die Bis(heptafluorpropyl)phosphinsäure und Dimethylether isoliert.

Überraschenderweise wurde gefunden, dass die Zugabe eines Alkalimetallfluorids oder eines Tetraalkylammoniumfluorids eine Isolierung der gewünschten Alkylester ermöglicht, die bisher lediglich als Intermediate postuliert wurden. Die Alkylgruppen des Tetraalkylammoniumfluorids sind jeweils unabhängig voneinander eine geradkettige oder verzweigte Alkylgruppe mit 1 bis 10 C-Atomen.

Der erste Gegenstand der Erfindung ist demzufolge ein Verfahren zur Herstellung von Phosphinsäureestern der Formel (I)

(CₙF_{2n+1-y}H_{y})₂P(O)OR (I),

wobei
n jeweils unabhängig voneinander 1, 2, 3, 4, 5, 6, 7, 8, 9, 10, 11 oder 12 bedeutet,
y jeweils unabhängig voneinander 0, 1, 2, 3 oder 4 bedeutet,
R unsubstituiertes oder substituiertes Phenyl, eine geradkettige oder verzweigte, nicht-fluorierte oder teilfluorierte oder deuterierte Alkylgruppe mit 1 bis 30 C-Atomen oder eine geradkettige oder verzweigte, nicht-fluorierte oder teilfluorierte Alkenyl- oder Alkinylgruppe mit 3 bis 30 C-Atomen bedeutet, wobei R teilweise mit Halogen und/oder teilweise mit -OH, -C(O)OH, N(CH₃)₂ und -CN substituiert sein kann und wobei ein oder zwei nicht benachbarte und nicht zum Sauerstoffatom oder zu Kohlenstoffatomen der Doppelbindung oder Dreifachbindung α-ständige Kohlenstoffatome der Alkyl-, Alkenyl- oder Alkinylgruppe durch Atome und/oder Atomgruppierungen ausgewählt aus der Gruppe -O-, -S-, -S(O)-, - SO₂-, -C(O)-, -C(O)O- oder -N(R')- ersetzt sein können und
R' jeweils unabhängig voneinander H, eine geradkettige oder verzweigte, nicht fluorierte oder teilweise-fluorierte Alkylgruppe mit 1 bis 18 C-Atomen, gesättigtes C₃- bis C₇-Cycloalkyl, unsubstituiertes oder substituiertes Phenyl bedeutet,
durch Reaktion eines Phosphinoxids der Formel (II)

(CₙF_{2n+1-y}H_{y})₃P(O) (II),

wobei n und y eine bei der Formel (I) angegebenen Bedeutungen haben, mit einem Alkohol oder Phenol R-OH in Gegenwart von Alkalimetallfluorid oder Tetraalkylammoniumfluorid, wobei R eine bei der Formel (I) angegebene Bedeutung hat, wobei der Gehalt an Wasser bei dieser Reaktion in Summe maximal 1000 ppm beträgt und wobei Alkyl in Tetraalkylammonium jeweils unabhängig voneinander eine geradkettige oder verzweigte Alkylgruppe mit 1 bis 10 C-Atomen bedeutet.

Die Ausgangsverbindungen, d.h. die bezeichneten Phosphinoxide der Formel (II), Alkohole oder Phenole ROH, Alkalimetallfluoride und/oder Tetraalkylammoniumfluoride sind kommerziell erhältlich oder nach bekannten Methoden herstellbar.

Die Phosphinoxide der Formel (II) können beispielsweise durch Reaktion von Tris(fluoralkyl)difluorphosphoranen oder Tris(perfluoralkyl)difluorphosphoranen mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat hergestellt werden, wie in WO 2011/110281 beschrieben. Die Herstellung der Ausgangsverbindungen Tris(perfluoralkyl)difluorphosphoran können beispielsweise durch elektrochemische Fluorierung geeigneter Ausgangsverbindungen hergestellt werden, wie in V. Ya. Semenii et al, Zh. Obshch. Khim., 55, 12, 1985, 2716-2720, N. Ignatiev et al, J. of Fluorine Chem., 103, 2000, 57-61 sowie der WO 00/21969 beschrieben. Die entsprechenden Beschreibungen werden hiermit als Referenz eingeführt und gelten als Teil der Offenbarung.

Besonders bevorzugt wird die erfindungsgemäße Reaktion unter Ausschluss von Wasser durchgeführt, wobei der Gehalt an Wasser in Summe maximal 1000 ppm beträgt. Ganz besonders bevorzugt liegt der Gehalt an Wasser in Summe bei 10 bis 200 ppm.

Bevorzugt wird der Alkohol oder das Phenol ROH mit einem Restwassergehalt zwischen 10 bis 1000 ppm eingesetzt, besonders bevorzugt mit einem Restwassergehalt zwischen 10 und 200 ppm.

Bevorzugt wird das Alkalimetallfluorid oder Tetraalkylammoniumfluorid mit einem Restwassergehalt zwischen 0 bis 990 ppm eingesetzt, besonders bevorzugt mit einem Restwassergehalt zwischen 0 und 190 ppm.

Erfindungsgemäß können die Alkalimetallfluoride der Gruppe Lithiumfluorid, Natriumfluorid, Kaliumfluorid, Rubidiumfluorid oder Cäsiumfluorid eingesetzt werden oder Tetraalkylammoniumfluoride, in denen die Alkylgruppe jeweils unabhängig voneinander eine geradkettige oder lineare Alkylgruppe mit 1 bis 10 C-Atomen bedeutet.

Eine geradkettige oder verzweigte Alkylgruppe mit 1 bis 10 C-Atomen ist beispielsweise Methyl, Ethyl, *iso*-Propyl, Propyl, Butyl, *sec*-Butyl oder *tert-*Butyl, Pentyl, 1-, 2- oder 3-Methylbutyl, 1,1-, 1,2- oder 2,2-Dimethylpropyl, 1-Ethylpropyl, *n*-Hexyl, *n*-Heptyl, *n*-Octyl, *n*-Nonyl oder *n*-Decyl.

Bevorzugte Tetraalkylammoniumfluoride sind Salze, in denen alle Alkylgruppen gleich sind, beispielsweise Tetramethylammoniumfluorid oder Tetra(n-butyl)ammoniumfluorid.

Erfindungsgemäß werden bevorzugt die Fluoride Kaliumfluorid, Natriumfluorid, Rubidiumfluorid, Cäsiumfluorid oder Tetramethylammoniumfluorid eingesetzt. Ganz besonders bevorzugt wird Kaliumfluorid eingesetzt.

Die eingesetzte Menge an dem zuvor beschriebenen Alkalimetallfluorid oder Tetraalkylammoniumfluorid liegt bevorzugt zwischen 0.05 und 0.5 mol bezogen auf 1 mol Phosphinoxid der Formel (II), ganz besonders bevorzugt bei 0.1 mol bezogen auf 1 mol Phosphinoxid der Formel (II).

Die im erfindungsgemäßen Verfahren eingesetzten Feststoffe sollten vorzugsweise in vermahlenem (sprüh-getrocknetem) Zustand eingesetzt werden, damit eine möglichst große Oberfläche zur Reaktion vorhanden ist.

Jede Art der Vermahlung ist möglich, beispielsweise die Vermahlung mittels einer Kugelmühle.

Im erfindungsgemäßen Verfahren kann der Alkohol oder das Phenol ROH, wie zuvor oder nachfolgend beschrieben mit einem bis zu 10%igen Überschuss eingesetzt werden, im Vergleich zur Einsatzmenge an dem Phosphinoxid der Formel (II), wie zuvor oder nachfolgend detailliert beschrieben. Vorzugsweise werden die beiden Verbindungen in äquimolarer Menge eingesetzt.

In einer bevorzugten Ausführungsform des Verfahrens wird das Alkalimetallfluorid oder Tetraalkylammoniumfluorid bei Temperaturen von - 10°C bis 0°C dem Phosphinoxid der Formel (II) zugesetzt, der Alkohol oder das Phenol wird zugegeben und die Reaktionsmischung wird anschließend auf eine Temperatur von 20°C bis 60°C bis zur vollständigen Umsetzung erwärmt.

In einer besonders bevorzugten Ausführungsform des Verfahrens wird das Alkalimetallfluorid oder Tetraalkylammoniumfluorid bei 0°C dem Phosphinoxid der Formel (II) zugegeben, gegebenenfalls eine Stunde bei dieser Temperatur gerührt, dann wird der Alkohol oder das Phenol zugegeben und die Reaktionsmischung auf eine Temperatur von 25°C bis zur vollständigen Umsetzung erwärmt.

Die Reaktion kann in einer Glasapparatur oder in einer Apparatur aus Kunststoff (wie z.B. Teflon) oder Stahl durchgeführt werden.

Bevorzugt wird ohne Lösungsmittel gearbeitet. Es ist jedoch auch möglich, in Gegenwart von Lösungsmitteln zu arbeiten, die inert gegenüber den Verbindungen der Formel (I) und (II) und gegenüber Alkalimetallfluoriden oder Tetraalkylammoniumfluoriden sind, beispielsweise Acetonitril, Propionitril, Hexan oder 1,2-Dimethoxyethan.

Bevorzugt werden Verbindungen der Formel (I) hergestellt, wie zuvor beschrieben, in denen die Variable y 0, 1 oder 2 bedeutet, besonders bevorzugt in denen die Variable y 0 bedeutet.

Demzufolge sind Ausgangsmaterialien der Formel (II) bevorzugt, in denen die Variable y 0, 1 oder 2 bedeutet, besonders bevorzugt sind die Ausgangsmaterialien der Formel (II) bevorzugt, in denen die Variable y 0 bedeutet.

Bevorzugt werden Verbindungen der Formel (I) hergestellt, wie zuvor beschrieben, in denen die Variable n 1, 2, 3 oder 4 bedeutet, besonders bevorzugt, in denen die Variable n 2, 3 oder 4 bedeutet.

In den Verbindungen der Formel (I) beziehungsweise im Alkohol oder Phenol ROH bedeutet R unsubstituiertes oder substituiertes Phenyl, eine geradkettige oder verzweigte, nicht-fluorierte oder teilfluorierte oder deuterierte Alkylgruppe mit 1 bis 30 C-Atomen oder eine geradkettige oder verzweigte, nicht-fluorierte oder teilfluorierte Alkenyl- oder Alkinylgruppe mit 3 bis 30 C-Atomen, wobei R teilweise mit Halogen und/oder teilweise mit -OH, -C(O)OH, N(CH₃)₂ und -CN substituiert sein kann und wobei ein oder zwei nicht benachbarte und nicht zum Sauerstoffatom oder zu Kohlenstoffatomen der Doppelbindung oder Dreifachbindung α-ständige Kohlenstoffatome der Alkyl-, Alkenyl- oder Alkinylgruppe durch Atome und/oder Atomgruppierungen ausgewählt aus der Gruppe -O-, -S-, -S(O)-, - SO₂-, -C(O)-, -C(O)O- oder -N(R')- ersetzt sein können und R' jeweils unabhängig voneinander H, eine geradkettige oder verzweigte, nicht fluorierte oder teilweise-fluorierte Alkylgruppe mit 1 bis 18 C-Atomen, gesättigtes C₃- bis C₇-Cycloalkyl, unsubstituiertes oder substituiertes Phenyl bedeutet.

Eine geradkettige oder verzweigte Alkylgruppe mit 1 bis 30 C-Atomen umfasst die zuvor beschriebene Gruppe der geradkettigen oder verzweigten Alkylgruppe mit 1 bis 10 C-Atomen und Undecanyl, Dodecanyl, Tridecanyl, Tetradecanyl, Pentadecanyl, Hexadecanyl, Heptadecanyl, Oktadecanyl, Nonadecanyl, Eicosanyl, Heneicosanyl, Docosanyl, Tricosanyl, Tetracosanyl, Pentacosanyl, Hexacosanyl, Heptacosanyl, Octacosanyl, Nonacosanyl und Triacontanyl.

Ein geradkettiges oder verzweigtes Alkenyl oder Alkinyl mit 3 bis 30 C-Atomen, wobei auch mehrere Doppel- oder Dreifach-bindungen vorhanden sein können, ist beispielsweise Allyl, 2- oder 3-Butenyl, Isobutenyl, *sek-*Butenyl, ferner 4-Pentenyl, Isopentenyl, Hexenyl, Heptenyl, Octenyl, - C₉H₁₇, -C₁₀H₁₉ bis -C₃₀H₄₉, Propargyl, 2- oder 3-Butinyl, C₅H₇ bis C₃₀H₄₇; vorzugsweise Allyl, 2- oder 3-Butenyl, Isobutenyl, *sek*-Butenyl, 4-Pentenyl, Isopentenyl, Hexenyl oder Decenyl oder Propargyl.

Teilfluoriert bedeutet, dass mindestens ein H-Atom der entsprechenden Alkyl-, Alkenyl- oder Alkinylgruppe durch ein F-Atom ersetzt wurde. Perfluoriert bedeutet, dass alle H-Atome der entsprechenden Alkyl- oder Alkenyl- oder Alkinylgruppe durch F-Atome ersetzt wurden. Deuteriert bedeutet, dass mindestens ein H-Atom der entsprechenden Alkyl-, Alkenyl- oder Alkinylgruppe durch ein Deuteriumatom ersetzt wurde.

Beispiele für eine geradkettige oder verzweigte Alkylgruppe mit 2 bis 10 C-Atomen, die teilweise mit Halogen und/oder teilweise mit -OH, -C(O)OH, N(CH₃)₂ und -CN substituiert sein kann und wobei ein oder zwei nicht benachbarte und nicht zum Sauerstoffatom oder zu Kohlenstoffatomen der Doppelbindung oder Dreifachbindung α-ständige Kohlenstoffatome durch Atome und/oder Atomgruppierungen ausgewählt aus der Gruppe -O-, -S-, -S(O)-, -SO₂-, -C(O)-, -C(O)O- oder -N(R')- ersetzt sein können sind -CH₂-O-CH₃, -CH₂-CH₂-O-CH₃, -CH₂-CH₂-O-CH₂-CH₃, -CH₂-C(O)OH, -CH₂-CH₂-NH-CH₃, -CH₂-N(CH₃)₂, -CH₂-CH₂-N(CH₃)₂,-CH₂-S-CH₃, -CH₂-CH₂-S-CH₃,-CH₂-CH₂-S-CH₂-CH₃, -CH₂-CH₂-S(O)₂OH, -CH₂-CH₂-CH₂-S(O)₂OH, -CH₂-CH₂-CH₂-CH₂-S(O)₂OH, -CH₂-CH₂-O-CH₂-CH₂-O-CH₃, -CH₂-CH₂-O-CH₂-CH₂-S-CH₃, -CH₂-CH₂-O-CH₂-CH₂-O-CH₂-CH₂-O-CH₃, -CH₂-CH₂-S(O)-CH₃, -CH₂-CH₂-SO₂-CH₃, -CH₂-CH₂-C(O)-CH₃, -CH₂-CH₂-C(O)O-CH₃,-CH(CH₃)-C(O)OH, -CH₂-CH₂-CH₂-C(O)OH, -(CH₂)₉-C(O)O-CH₃, -CH₂-CH₂-O-CH₂-CH₂-O-CH₂-CH₂-C(O)O-CH₂-CH₂-CH₃, -CH₂-CH₂-CH₂-Br, -CH₂-CH₂-O-CH₂CF₃, -CH₂-CH₂-CH₂-OH oder -CH₂-CH₂-CN.

Beispiele für eine geradkettige oder verzweigte teilfluorierte Alkylgruppe mit 3 bis 10 C-Atomen, wobei ein oder zwei nicht benachbarte und nicht zum Sauerstoffatom α-ständige Kohlenstoffatome durch Atome und/oder Atomgruppierungen ausgewählt aus der Gruppe -O-, -S-, -S(O)-, -SO₂-,-C(O)-, -C(O)O- oder -N(R')- ersetzt sein können sind -CH₂-CH₂-O-CF₃, -CH₂-CH₂-O-CH₂-CF₃, -CH₂-(CF₂)₃-CF₂H, -CH₂-CH₂-N(CF₃)₂, -CH₂-CH₂-S-CF₃, -CH₂-CH₂-S-CH₂-CF₃, -CH₂-CH₂-O-CF₂-CF₂-O-CH₃, -CH₂-CH₂-S(O)-CF₃, -CH₂-CH₂-SO₂-CF₃, -CH₂-CH₂-C(O)-CH₂-CF₃, -CH₂-CH₂-C(O)O-CH₂-CF₃ oder -CH₂-CH₂-(CF₂)₂-C(O)O-CH₃.

Beispiele für eine geradkettige oder verzweigte Alkenylgruppe mit 3 bis 10 C-Atomen, wobei ein oder zwei nicht benachbarte und nicht zum Sauerstoffatom α-ständige Kohlenstoffatome durch Atome und/oder Atomgruppierungen ausgewählt aus der Gruppe -O-, -S-, -S(O)-, -SO₂-,-C(O)-, -C(O)O- oder -N(R')- ersetzt sein können sind -CH₂-O-CH=CH₂,-CH₂-S-CH=CH₂, -CH₂-NH-CH=CH₂, -CH₂-N(CH₃)-CH₂-CH=CH₂, -CH₂-CH₂-O-CH₂-CH=CH₂, -CH₂-CH₂-O-CH=CH₂, -CH₂-CH₂-S-CH₂-CH=CH₂, -CH₂-CH₂-C(O)-CH₂-CH=CH₂, -CH₂-CH₂-C(O)-CH=CH₂, -CH₂-CH₂-C(O)O-CH₂-CH=CH₂, -CH₂-CH₂-S(O)-CH₂-CH=CH₂, -CH₂-CH₂-SO₂-CH₂-CH=CH₂,-CH₂-(CH₂)₂-O-CH₂-CH=CH₂, -CH₂-(CH₂)₃-O-CH₂-CH=CH₂) -CH₂-(CH₂)₄-O-CH₂-CH=CH₂, -CH₂-(CH₂)₅-O-CH₂-CH=CH₂ oder -CH₂-(CH₂)₆-O-CH₂-CH=CH₂.

Beispiele für eine geradkettige oder verzweigte Alkinylgruppe mit 3 bis 10 C-Atomen, wobei ein oder zwei nicht benachbarte und nicht zum Sauerstoffatom α-ständige Kohlenstoffatome durch Atome und/oder Atomgruppierungen ausgewählt aus der Gruppe -O-, -S-, -S(O)-, -SO₂-,-C(O)-, -C(O)O- oder -N(R')- ersetzt sein können sind -CH₂-N(CH₃)-CH₂-C≡CH, -CH₂-CH₂-O-CH₂-C≡CH, -CH₂-CH₂-S-CH₂-C≡CH, -CH₂-CH₂-C(O)-CH₂-C≡CH, -CH₂-CH₂-C(O)-C≡CH, -CH₂-CH₂-C(O)O-CH₂-C≡CH, -CH₂-CH₂-S(O)-CH₂-C≡CH, -CH₂-CH₂-SO₂-CH₂-C≡CH, -CH₂-(CH₂)₂-O-CH₂-C≡CH, -CH₂-(CH₂)3-O-CH₂-C≡CH, -CH₂-(CH₂)₄-O-CH₂-C≡CH, -CH₂-(CH₂)₅-O-CH₂-C≡CH oder -CH₂-(CH₂)₆-O-CH₂-C≡CH.

Beispiele für ein gesättigtes C₃- bis C₇-Cycloalkyl sind Cyclopropyl, Cyclobutyl, Cyclopentyl, Cyclohexyl oder Cycloheptyl.

Substituiertes Phenyl in R' oder R bedeutet eine Phenylgruppe, die durch eine geradkettige oder verzweigte, nicht fluorierte, teilfluorierte oder perfluorierte Alkylgruppe mit 1 bis 6 C-Atomen, eine geradkettige oder verzweigte, nicht fluorierte, teilfluorierte oder perfluorierte Alkenylgruppe mit 2 bis 10 C-Atomen, eine geradkettige oder verzweigte, nicht fluorierte, teilfluorierte oder perfluorierte Alkinylgruppe mit 2 bis 10 C-Atomen, -CN, - NO₂, F, Cl, Br, I, -OH, eine geradkettige oder verzweigte, nicht fluorierte, teilfluorierte oder perfluorierte Alkoxygruppe mit 1 bis 6 C-Atomen, N(R")₂,-COOH, -C(O)OR", -C(O)R", -SO₂X', -SR", -S(O)R", -SO₂R", SO₂N(R")₂ oder SO₃H substituiert sein kann, wobei X' F, Cl oder Br bedeutet und R" eine nicht fluorierte, teilfluorierte oder perfluorierte geradkettige oder verzweigte Alkylgruppe mit 1 bis 6 C-Atomen bedeutet, beispielsweise o-, m- or p-Methylphenyl, o-, m- or p-Ethylphenyl, o-, m- oder p-Propylphenyl, o-, m- oder p-Isopropylphenyl, o-, m- oder p-*tert*-Butylphenyl, o-, m- oder p-Nitrophenyl, o-, m- oder p-Hydroxyphenyl, o-, m- oder p-Methoxyphenyl, o-, m- oder p-Ethoxyphenyl, o-, m- oder p-(Trifluormethyl)phenyl, o-, m-oder p-(Trifluormethoxy)phenyl, o-, m- oder p-(Trifluormethylsulfonyl)phenyl, o-, m- oder p-Fluorphenyl, o-, m- oder p-Chlorphenyl, o-, m- oder p-Bromphenyl, o-, m- oder p-lodphenyl.

Bevorzugt werden Verbindungen der Formel (I) hergestellt, in denen R eine geradkettige oder verzweigte nicht fluorierte oder teilfluorierte Alkylgruppe mit 1 bis 10 C-Atomen, eine geradkettige oder verzweigte Alkenylgruppe mit 3 bis 10 C-Atomen, eine geradkettige oder verzweigte Alkinylgruppe mit 3 bis 10 C-Atomen oder unsubstituiertes oder substituiertes Phenyl bedeutet, wobei ein oder zwei nicht benachbarte und nicht zum Sauerstoffatom oder zu Kohlenstoffatomen der Doppelbindung oder Dreifachbindung α-ständige Kohlenstoffatome durch Atome und/oder Atomgruppierungen ausgewählt aus der Gruppe -O-, -C(O)- oder -C(O)O-ersetzt sein können.

Besonders bevorzugt werden Verbindungen der Formel (I) hergestellt, in denen R eine geradkettige oder verzweigte nicht fluorierte oder teilfluorierte Alkylgruppe mit 1 bis 4 C-Atomen, eine geradkettige oder verzweigte Alkenylgruppe mit 3 bis 10 C-Atomen, eine geradkettige Alkinylgruppe mit 3 bis 6 C-Atomen oder Phenyl bedeutet, wobei ein nicht benachbartes und nicht zum Sauerstoffatom oder zu Kohlenstoffatomen der Doppelbindung oder Dreifachbindung α-ständiges Kohlenstoffatom durch -O- ersetzt sein können.

Ganz besonders bevorzugt werden Verbindungen der Formel (I) hergestellt, in denen R Methyl, Ethyl, 2,2,2-Trifluorethoxyethyl, 3-Brompropyl, 3-Hydroxy-propyl, 2-Cyanoethyl, 2,2,3,3,4,4,5,5-Octafluorpentyl, Allyloxyethyl, Allyl, Decenyl, Propargyl oder Phenyl bedeutet.

Die nach dem erfindungsgemäßen Verfahren hergestellten Verbindungen der Formel (I), wie zuvor beschrieben, sind reine Verbindungen und eignen sich in idealer Weiser zur weiteren Umsetzung, insbesondere zur Alkylierung von organischen Verbindungen, insbesondere aber zur Herstellung von organischen Salzen mit dem zum Phosphinsäureester korrespondierenden Phosphinat-Anion. Die folgenden Beispiele zeigen unter anderem auch diese Anwendung.

Die Verbindungen der Formel (I) können erfindungsgemäß auch deuteriert hergestellt werden, in dem man von deuterierten Alkoholen oder Phenolen ausgeht und entsprechend dem erfindungsgemäßen Verfahren umsetzt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele:

**NMR Spektroskopie:** NMR Proben werden entweder in einem 5 mm (Ø_{A}) Glas-NMR-Röhrchen oder in einem 3,7 mm (Ø_{A}) FEP Inliner bei 25 °C gemessen. Bei Messungen in FEP wird der Inliner in ein 5 mm (Ø_{A}) Prezisions-Glas-NMR-Röhrchen (Wilmad 537) eingebracht. Das Lockmittel (CD₃CN) befindet sich im Glas-NMR Röhrchen also zwischen Glas und FEP Inliner. Die Messungen erfolgen auf einem 400 MHz Bruker Avance III Spektrometer mit einem 9.3980 T Kryomagneten und einem 5 mm-BBFO Probenkopf.

¹H NMR Spektren werden im ¹H/¹⁹F Kanal bei 400.17 MHz gemessen. ¹³C, ¹⁹F und ³¹P NMR Spektren wurden im Breitbandkanal bei 100.62, 376.54 und 161.99 MHz gemessen. Die ¹H NMR chemischen Verschiebungen werden auf Tetramethylsilan (TMS) bezogen und ergeben für die Lösemittel CDCl₃ (7.24 ppm) und CD₃CN (1.95 ppm). Die ¹³C chemischen Verschiebungen werden ebenfalls auf TMS bezogen und ergeben für die Lösemittel CDCl₃ (77.2 ppm) und CD₃CN (118.7 ppm). Die ¹⁹F chemischen Verschiebungen werden auf CFCl₃ bezogen und ergeben für die internen Standards C₆F₆ (-162.9 ppm) oder C₆H₅CF₃ (-63.9 ppm). Die ³¹P chemischen Verschiebungen werden auf H₃PO₄ (85%) bezogen.

### Beispiel 1:

### Darstellung von Bis(pentafluorethyl)phosphinsäuremethylester, (C₂F₅)₂P(O)OCH₃, ohne Alkalimetall- oder Tetraalkylammoniumfluorid:

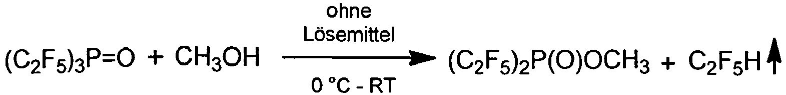

In einem 100 ml Glaskolben wird trockenes Methanol (0.697 g; 21.8 mmol) zu gekühltem (0 °C) Tris(pentafluorethyl)phosphinoxid, (C₂F₅)₃P=O, (8.42 g; 20.8 mmol) gegeben. Es ist ein zweiphasiges Reaktionsgemisch zu beobachten. Dieses wird 1 h bei 0 °C und anschließend 47 h bei Raumtemperatur gerührt. Nach *ca*. 20 Minuten bei Raumtemperatur ist eine klare und farblose Reaktionslösung zu beobachten. Mit zunehmender Zeit bei Raumtemperatur färbt sich die Lösung schwach gelb.
Zusammensetzung im ³¹P-NMR-Spektrum nach 47 h bei Raumtemperatur: Bis(pentafluorethyl)phosphinsäuremethylester, (C₂F₅)₂P(O)OCH₃: 2 %
Tris(pentafluorethyl)phosphinoxid, (C₂F₅)₃P=O: 55 %
Bis(pentafluorethyl)phosphinat-Anion, [(C₂F₅)₂POO]⁻: 37 %
nicht charakterisierte Verbindungen: 6 %

### Beispiel 2.

### Darstellung von Bis(pentafluorethyl)phosphinsäureethylester, (C₂F₅)₂P(O)OC₂H₅, ohne Katalysator (Alkalimetall- oder Tetraalkylammoniumfluorid):

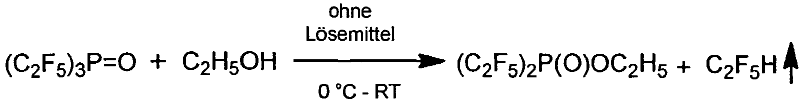

In einem 100 ml Glaskolben wird trockenes Ethanol (0.887 g; 19.3 mmol) zu gekühltem (0 °C) Tris(pentafluorethyl)phosphinoxid, (C₂F₅)₃P=O, (7.97 g; 19.7 mmol) gegeben. Es ist ein zweiphasiges Reaktionsgemisch zu beobachten. Nach 1 h bei 0 °C ist das Reaktionsgemisch eine klare und gelb gefärbte Lösung, die bis Raumtemperatur erwärmt und insgesamt 47 h gerührt wird. Mit zunehmender Zeit bei Raumtemperatur färbt sich die Lösung orange-braun.

Zusammensetzung im ³¹P-NMR-Spektrum nach 47 h bei Raumtemperatur: Bis(pentafluorethyl)phosphinsäureethylester, (C₂F₅)₂P(O)OC₂H₅: 29 %
Tris(pentafluorethyl)phosphinoxid, (C₂F₅)₃P=O: 39 %
Bis(pentafluorethyl)phosphinat-Anion, [(C₂F₅)₂POO]⁻: 26 %
Nicht charakterisierte Verbindungen: 6 %

### Beispiel 3.

### Darstellung von Bis(pentafluorethyl)phosphinsäuremethylester, (C₂F₅)₂P(O)OCH₃:

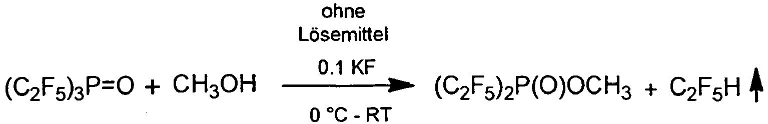

In einem 250 ml Glaskolben wird Kaliumfluorid (0.85 g; 14.6 mmol) in Tris(pentafluorethyl)phosphinoxid, (C₂F₅)₃P=O, (54.37 g; 134.6 mmol) suspendiert, gekühlt (0 °C) und trockenes Methanol (4.43 g; 138.2 mmol) zugegeben. Die klare und farblose Reaktionslösung wird 1.5 h bei 0 °C gerührt, erwärmt und 43 h bei Raumtemperatur gerührt. Nach Umkondensation im Vakuum (10⁻³ mbar) bei 30 °C und zweifacher fraktionierter Destillation unter verminderten Druck (Sdp.: 76 bis 78 °C bei 52 mbar) wird Bis(pentafluorethyl)phosphinsäuremethylester, (C₂F₅)₂P(O)OCH₃, als klare und farblose Flüssigkeit (23.65 g; 74.8 mmol) in 56 %-iger Ausbeute und 98 %-iger Reinheit isoliert.

Das isolierte Produkt wird mittels ¹H, ¹⁹F und ³¹P NMR-Spektren in CD₃CN charakterisiert.
¹H NMR: δ in ppm: 4.24 d (3H), ³ *J*_{H,p} = 11.1 Hz.
¹⁹F NMR: δ in ppm: -81.6 m (6F), -124.7 m (4F).
³¹P NMR: δ in ppm: 10.0 quin,m, ²*J*_{F,P} = 87.8 Hz.

### Beispiel 4.

### Darstellung von 1,3-Dimethylimidazoliumbis(pentafluorethyl)phosphinat, [MMIM][(C₂F₅)₂P(O)O]:

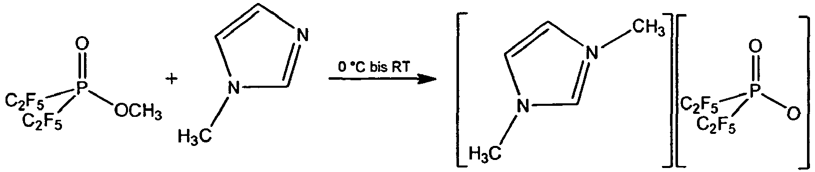

In einem 25 ml Glaskolben wird Bis(pentafluorethyl)phosphinsäuremethylester, (C₂F₅)₂P(O)OCH₃, (1.870 g; 5.9 mmol) langsam zu gekühltem (0 °C) N-Methylimidazol (0.424 g; 5.2 mmol) zugetropft (exotherm). Es bildet sich weiße Feststoff. Die Reaktionsmischung wird mit 3,5 ml *n*-Hexan verdünnt, bis Raumtemperatur erwärmt und 30 min gerührt. Die leichtflüchtigen Bestandteile werden im Vakuum (10⁻³ mbar) bei Raumtemperatur entfernt. 1,3-Dimethylimidazoliumbis(pentafluorethyl)-phosphinat, [MMIM][(C₂F₅)₂P(O)O], (1.982 g; 5.0 mmol) wird als weißer Feststoff in 96 %-iger Ausbeute und 97 %-iger Reinheit isoliert.

Das isolierte Produkt wird mittels ¹H, ¹⁹F und ³¹P NMR-Spektren in CD₃CN charakterisiert.
¹H NMR: δ in ppm: 8.53 br.s (1H), 7.36 d (2H), ⁴*J*_{H,H} = 1.5; Hz; 3.8 s (6H).
¹⁹F NMR: δ in ppm: -81.5 m (6F), -126.2 d (4F), ²*J*_{F,P} = 65.7 Hz.
³¹P NMR: δ in ppm: -1.5 quin, m, ²*J*_{F,P} = 65.8 Hz.

### Elementaranalyse

Experimentell, %: N 6.80, C 27.02 und H 2.20;
berechnet für C₉H₉F₁₀N₂O₂P, %: N 7.04, C 27.15 und H 2.28

### Beispiel 5.

### Darstellung von Methyldiphenylsulfoniumbis(pentafluorethyl)phosphinat, [CH₃S(C₆H₅)₂][(C₂F₅)₂P(O)O]:

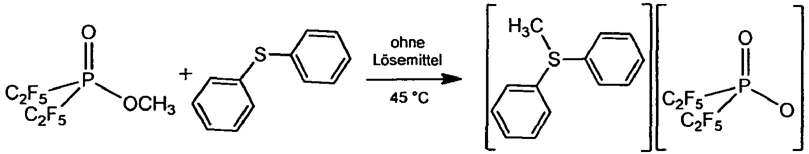

In einem 25 ml Glaskolben wird Bis(pentafluorethyl)phosphinsäuremethylester, (C₂F₅)₂P(O)OCH₃, (1.77 g; 5.6 mmol) langsam zu gekühltem (0 °C) Diphenylsulfid (1.01 g; 5.4 mmol) zugetropft. Das zweiphasige Reaktionsgemisch wird erwärmt und 17 h bei 45 °C gerührt. Die leichtflüchtigen Bestandteile werden im Vakuum (10⁻³ mbar) bei Raumtemperatur entfernt. Methyldiphenylsulfonium-bis(pentafluorethyl)phosphinat, [CH₃S(C₆H₅)₂][(C₂F₅)₂P(O)O], (2.31 g, 4.6 mmol) wird als schwach gelb gefärbte und hoch viskose Flüssigkeit in 85 %-iger Ausbeute und 90 %-iger Reinheit isoliert.

Das isolierte Produkt wird mittels ¹H, ¹⁹F und ³¹P NMR-Spektren in CD₃CN charakterisiert.

¹H NMR: δ in ppm: 7.93 d,m (4H), ³*J*_{H,H} = 7.3 Hz; 7.80 t,m (2H), ³*J*_{H,H} = 7.5 Hz; 7.71 t,m (4H), ³*J*_{H,H} = 7.3 Hz; 3.65 s (3H).
¹⁹F NMR: δ in ppm: -81.3 m (6F), -126.0 d (4F), ²*J*_{F,P} = 70.0 Hz.
³¹P NMR: δ in ppm: -1.2 quin,m, ²*J*_{F,P} = 70.0 Hz.

### Elementaranalyse

Experimentell, %: C 40.26, H 2.37 und S 6.27;
berechnet für C₁₇H₁₃F₁₀O₂PS, %: C 40.65, H 2.61 und S 6.38

### Beispiel 6.

### Darstellung von N,N-Dimethylpyrrolidiniumbis(pentafluorethyl)phosphinat, [MMPL][(C₂F₅)₂P(O)O]:

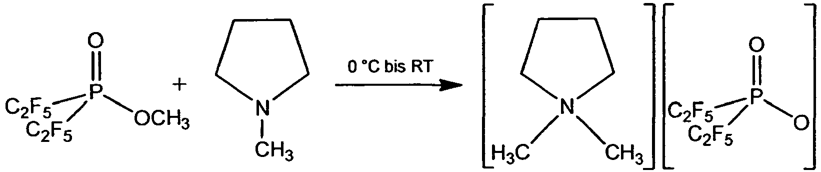

In einem 25 ml Glaskolben wird Bis(pentafluorethyl)phosphinsäure-methylester, (C₂F₅)₂P(O)OCH₃, (3.15 g; 10.0 mmol) langsam zu trocknem, gekühltem (0 °C) *N*-Methylpyrrolidin (0.85 g; 10.0 mmol) zugetropft (exotherm). Es bildet sich eine weiße Suspension. Die Reaktionsmischung wird mit 2 ml *n*-Hexan verdünnt, bis Raumtemperatur erwärmt und 30 min gerührt. Die leichtflüchtigen Bestandteile werden im Vakuum (10⁻³ mbar) bei 35 °C entfernt. *N,N*-Dimethylpyrrolidinium-bis(pentafluorethyl)phosphinat, [MMPL][(C₂F₅)₂P(O)O], (2.72 g; 6.8 mmol) wird als weißer Feststoff in 68 %-iger Ausbeute und 98 %-iger Reinheit isoliert.

Das isolierte Produkt wird mittels ¹H, ¹⁹F und ³¹P NMR-Spektren in CD₃CN charakterisiert.
¹H NMR: δ in ppm: 3.45 t,m (4H), ³*J*_{H,H} = 7.3 Hz, 3.07 s (6H), 2.20 m (4H).
¹⁹F NMR: δ in ppm -81.5 m (6F), -126.1 d (4F), ²*J*_{F,P} = 65.4 Hz.
³¹P NMR: δ in ppm -1.7 quin,m, ²*J*_{F,P} = 65.4 Hz.
**Schmelzpunkt:** 121 °C

### Elementaranalyse

Experimentell, %: N 3.53, C 30.06 und H 3.49;
berechnet für C₁₀H₁₄F₁₀NO₂P, %: N 3.49, C 29.94 und H 3.52.

### Beispiel 7.

### Darstellung von Triethylmethylammoniumbis(pentafluorethyl)phosphinat, [CH₃N(C₂H₅)₃][(C₂F₅)₂P(O)O]:

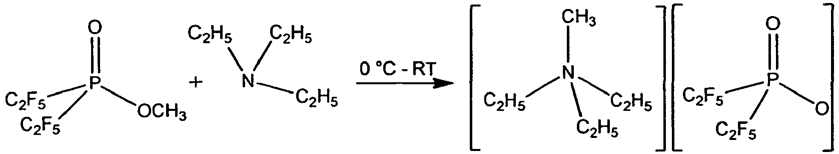

In einem 10 ml Glaskolben wird Bis(pentafluorethyl)phosphinsäure-methylester, (C₂F₅)₂P(O)OCH₃, (1.83 g; 5.8 mmol) langsam zu trocknem und gekühltem (0 °C) Triethylamin (0.59 g; 5.9 mmol) zugetropft (exotherm). Es bildet sich ein gelber Feststoff. Die Reaktionsmischung wird mit 10 ml *n*-Hexan verdünnt, bis Raumtemperatur erwärmt und 20 min gerührt. Die leichtflüchtigen Bestandteile werden im Vakuum (10⁻³ mbar) bei Raumtemperatur entfernt. Triethylmethylammonium-bis(pentafluorethyl)phosphinat, [CH₃N(C₂H₅)₃][(C₂F₅)₂P(O)O], (2.19 g; 5.3 mmol) wird als schwach gelb gefärbter Feststoff in 91 %-iger Ausbeute und 99 %-iger Reinheit isoliert.

Das isolierte Produkt wird mittels ¹H, ¹⁹F und ³¹P NMR-Spektren in CD₃CN charakterisiert.
¹H NMR: δ in ppm: 3.25 q (6H), ³*J*_{H,H} = 7.3 Hz, 2.86 s (3H), 1.27 t,m (9H), ³*J*_{H,H} = 7.3 Hz.
¹⁹F NMR: δ in ppm: -81.5 m (6F), -126.1 d (4F), ²*J*_{F,P} = 65.4 Hz.
³¹P NMR: δ in ppm -1.7 quin, m, ²*J*_{F,P} = 65.5 Hz.
**Schmelzpunkt:** 107 °C

### Elementaranalyse

Experimentell, %: N 3.40, C 31.72 und H 3.54;
berechnet für C₁₁H₁₈F₁₀NO₂P, %: N 3.36, C 31.67 und H 4.35.

### Beispiel 8.

### Darstellung von N,N,N',N',O-Pentamethylisouronium-bis(pentafluorethyl)phosphinat, [((CH₃)₂N)₂COCH₃][(C₂F₅)₂P(O)O]:

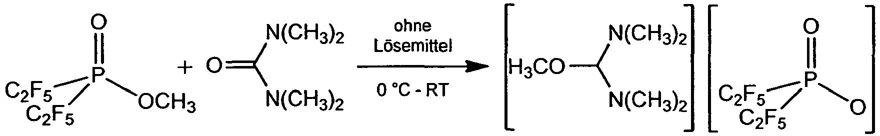

In einem 25 ml Glaskolben wird Bis(pentafluorethyl)phosphinsäuremethylester, (C₂F₅)₂P(O)OCH₃, (3.76 g; 11.9 mmol) langsam zu trocknem und gekühltem (0 °C) *N,N,N',N'*-Tetramethylharnstoff (1.28 g; 11.0 mmol) zugetropft. Die farblose Reaktionslösung wird erwärmt (Raumtemperatur), 22.5 h gerührt und die leichtflüchtigen Bestandteile werden im Vakuum (10⁻³ mbar) bei Raumtemperatur entfernt. *N,N,N',N',O*-Pentamethyl-isouroniumbis(pentafluorethyl)phosphinat,
[((CH₃)₂N)₂COCH₃][(C₂F₅)₂P(O)O], (4.73 g; 10.9 mmol) wird als farblose, hoch viskose Flüssigkeit in quantitativer Ausbeute und 99 %-iger Reinheit isoliert.

Das isolierte Produkt wird mittels ¹H, ¹⁹F und ³¹P NMR-Spektren in CD₃CN charakterisiert.
¹H NMR: δ in ppm: 4.05 s (3H), 3.05 s (12H)
¹⁹F NMR: δ in ppm: -81.5 m (6F), -126.1 d (4F), ²*J*_{F,P} = 65.6 Hz.
³¹P NMR: δ in ppm: -1.6 quin,m, ²*J*_{F,P} = 65.5 Hz.

### Elementaranalyse

Experimentell, %: N 6.36, C 27.05 und H 3.23;
berechnet für C₁₀H₁₆F₁₀N₂O₃P, %: N 6.47, C 27.73 und H 3.72.

### Beispiel 9.

### Darstellung von N,N,N',N',N"-Pentamethylguanidinium-bis(pentafluorethyl)phosphinat, [((CH₃)₂N)₂CNHCH₃][(C₂F₅)₂P(O)O]:

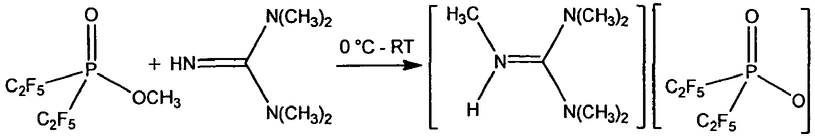

In einem 25 ml Glaskolben wird Bis(pentafluorethyl)phosphinsäuremethylester, (C₂F₅)₂P(O)OCH₃, (3.22 g; 10.2 mmol) langsam zu trocknem und gekühltem (0 °C) 1,1,2,2-Tetramethylguanidin (1.12 g; 9.7 mmol) zugetropft (exotherm). Die spontan gebildete trübe, hoch viskose Flüssigkeit wird erwärmt (Raumtemperatur), mit 10 ml n-Hexan verdünt und das Reaktionsgemisch wird 3 h gerührt. Die leichtflüchtigen Bestandteile werden im Vakuum (10⁻³ mbar) bei 40 °C entfernt. *N,N,N',N',N"-*Pentamethylguanidiniumbis(pentafluorethyl)phosphinat, [((CH₃)₂N)₂CNHCH₃][(C₂F₅)₂P(O)O], (4.04 g; 9.4 mmol) wird als farblose, trübe und hoch viskose Flüssigkeit in 97 %-iger Ausbeute und 88 %-iger Reinheit isoliert.

Das isolierte Produkt wird mittels ¹H, ¹⁹F und ³¹P NMR-Spektren in CD₃CN charakterisiert.
¹H NMR: δ in ppm: 6.67 s (1H), 2.94 s (3H), 2.92 s (6H), 2.90 s (6H).
¹⁹F NMR: δ in ppm: -81.5 m (6F), -126.1 d (4F), ²*J*_{F,P} = 66.1 Hz.
³¹P NMR: δ in ppm: -1.6 quin,m, ²*J*_{F,P} = 66.1 Hz.

### Elementaranalyse

Experimentell, %: N 9.83, C 28.00 und H 3.86;
berechnet für C₁₀H₁₆F₁₀N₃O₂P, %: N 9.74, C 27.85 und H 3.74.

### Beispiel 10.

### Darstellung von N,N-Butylmethylpyrrolidiniumbis(pentafluorethyl)phosphinat, [BMPL)[(C₂F₅)₂P(O)O]:

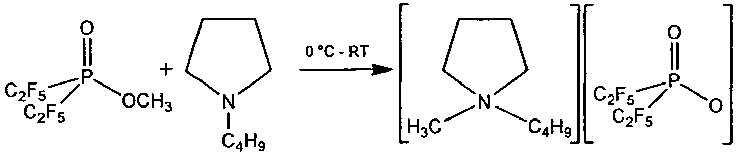

In einem 25 ml Glaskolben wird Bis(pentafluorethyl)phosphinsäuremethylester, (C₂F₅)₂P(O)OCH₃, (3.67 g; 11.6 mmol) langsam zu trocknem und gekühltem (0 °C) *N*-Butylpyrrolidin (1.38 g; 11.2 mmol) zugetropft (exotherm). Es bildet sich ein schwach gelb gefärbter Feststoff. Die Reaktionsmischung wird erwärmt bis Raumtemperatur, mit 10 ml *n*-Hexan verdünnt und 16.5 h gerührt. Die leichtflüchtigen Bestandteile werden im Vakuum (10⁻³ mbar) bei Raumtemperatur entfernt. *N-Butyl-N-*methylpyrrolidiniumbis(pentafluorethyl)phosphinat, [BMPL][(C₂F₅)₂P(O)O], (4.71 g; 10.7 mmol) wird als schwach gelb gefärbter Feststoff in 96 %-iger Ausbeute und 99 %-iger Reinheit isoliert.

Das isolierte Produkt wird mittels ¹H, ¹⁹F und ³¹P NMR-Spektren in CD₃CN charakterisiert.
¹H NMR: δ in ppm: 3.43 m (4H), 3.25 m (2H), 2.96 s (3H), 2.17 m (4H), 1.74 m (2H), 1.40 t,q (2H), ³*J*_{H,H} =7.5 Hz, 0.99 t (3H), ³*J*_{H,H} = 7.3 Hz.
¹⁹F NMR: δ in ppm: -81.5 m (6F), 126.1 d (4F), ²*J*_{F,P} = 65.6 Hz.
³¹P NMR: δ in ppm: -1.6 quin,m, ²*J*_{F,P} = 65.6 Hz.
**Schmelzpunkt:** 118 °C

### Elementaranalyse

Experimentell, %: N 3.16, C 35.48 und H 4.47;
berechnet für C₁₃H₂₀F₁₀NO₂P, %: N 3.16, C 35.23 und H 4.55.

### Beispiel 11.

### Darstellung von 1-Ethyl-3-methylimidazoliumbis(pentafluorethyl)phosphinat, [EMIM][(C₂F₅)₂P(O)O]:

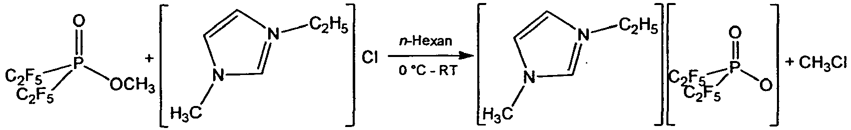

In einem 10 ml Glaskolben wird gereinigtes 1-Ethyl-3-methylimidazoliumchlorid, [EMIM]Cl, (0.304 g; 2.1 mmol) in *n*-Hexan (*ca*. 4 ml) suspendiert, gekühlt (0 °C) und Bis(pentafluorethyl)phosphinsäuremethylester, (C₂F₅)₂P(O)OCH₃, (0.676 g; 2.1 mmol) wird zugegeben. Das Reaktionsgemisch wird erwärmt (Raumtemperatur) und 26 h gerührt. Die leichtflüchtigen Bestandteile werden im Vakuum (10⁻³ mbar) bei Raumtemperatur entfernt. 1-Ethyl-3-methylimidazoliumbis(pentafluorethyl)-phosphinat, [EMIM][(C₂F₅)₂P(O)O], (0.86 g; 2.1 mmol) wird als schwach gelb gefärbte, hoch viskose Flüssigkeit in quantitativer Ausbeute mit einer 99 %-igen Reinheit isoliert.

Das isolierte Produkt wird mittels ¹H, ¹⁹F und ³¹P NMR-Spektren in CD₃CN charakterisiert.
¹H NMR: δ in ppm: 8.77 br.s (1 H), 7.47 d,d (1 H), ³*J*_{H,H} = 1.8 Hz; 7.41 d,d (1 H), ³*J*_{H,H} = 1.8 Hz; 4.20 q (2H), ³*J*_{H,H} = 7.3 Hz; 3.85 s (3H); 1.47 t (3H), ³*J*_{H,H} = 7.3 Hz.
¹⁹F NMR: δ in ppm: -81.5 m (6F), -126.2 d (4F), ²*J*_{F,P} = 66.8 Hz.
³¹P NMR: δ in ppm: -1.4 quin,m, ²*J*_{F,P} = 66.9 Hz.

### Beispiel 12.

### Darstellung von Bis(pentafluorethyl)phosphinsäureethylester, (C₂F₅)₂P(O)OC₂H₅:

### A) KF als Katalysator

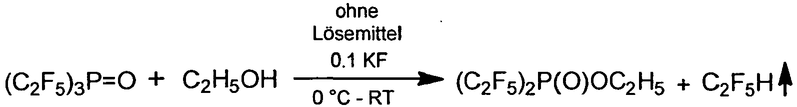

In einem 100 ml Glaskolben wird Kaliumfluorid (0.515 g; 8.9 mmol) in Tris(pentafluorethyl)phosphinoxid, (C₂F₅)₃P=O, (33.02 g; 81.7 mmol) suspendiert, gekühlt (0 °C) und trockenes Ethanol (3.84 g; 83.3 mmol) zugegeben. Die klare und farblose Reaktionslösung wird 1 h bei 0 °C und 20.5 h bei Raumtemperatur gerührt. Nach Umkondensation im Vakuum (10⁻³ mbar) bei 25 °C und anschließender fraktionierter Destillation bei verminderten Druck (Sdp.: 69 bis 70 °C bei 38 mbar) wird Bis(pentafluorethyl)phosphinsäureethylester, (C₂F₅)₂P(O)OC₂H₅, als klare und farblose Flüssigkeit (16.04 g; 48.6 mmol) in 59 %-iger Ausbeute und 98 %-iger Reinheit isoliert.

Das isolierte Produkt wird mittels ¹H, ¹⁹F und ³¹P NMR-Spektren in CD₃CN charakterisiert.
¹H NMR: δ in ppm: 4.68 d,q (2H), ³*J*_{H,P} = 8.3 Hz, ³*J*_{H,H} = 7.1 Hz, 1.49 t (3H), ³*J*_{H,H} = 7.1 Hz.
¹⁹F NMR: δ in ppm: -81.5 m (6F), -124.8 m (4F).
³¹P NMR: δ in ppm: 8.4 quin, ²*J*_{F,P} = 87.8 Hz.

### Elementaranalyse

Experimentell, %: C 21.27 und H 1.32;
berechnet für C₆H₅F₁₀O₂P, %: C 21.83 und H 1.53.

### B) NaF als Katalysator

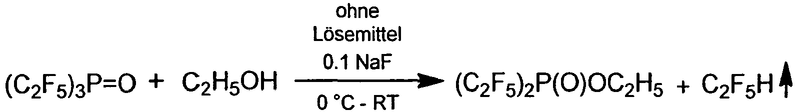

In einem 25 ml Glaskolben wird Natriumfluorid (0.043 g; 1.0 mmol) in Tris(pentafluorethyl)phosphinoxid, (C₂F₅)₃P=O, (3.701 g; 9.2 mmol) suspendiert, gekühlt (0 °C) und trockenes Ethanol (0.446 g; 9.7 mmol) zugegeben. Die klare und farblose Reaktionslösung wird 1 h bei 0 °C gerührt, erwärmt und 3.5 h bei Raumtemperatur gerührt. Die Bildung von (C₂F₅)₂P(O)OC₂H₅ mit 88 % Ausbeute (detektiert mittels ³¹P und ¹⁹F NMR) wird festgestellt. Bis(pentafluorethyl)-phosphinsäureethylester, (C₂F₅)₂P(O)OC₂H₅, wird als klare und farblose Flüssigkeit mit der in Beispiel 12 A beschriebenen Methode isoliert.

### C) RbF als Katalysator

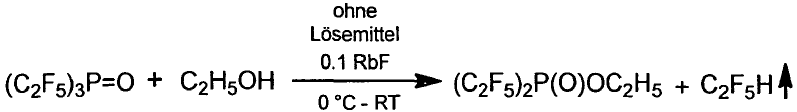

In einem 100 ml Glaskolben wird Rubidiumfluorid (0.101 g; 1.0 mmol) in Tris(pentafluorethyl)phosphinoxid, (C₂F₅)₃P=O, (3.261 g; 8.1 mmol) suspendiert, gekühlt (0 °C) und trockenes Ethanol (0.406 g; 8.8 mmol) zugegeben. Die klare und farblose Reaktionslösung wird 1 h bei 0 °C gerührt, erwärmt und 3.5 h bei Raumtemperatur gerührt. Die Bildung von (C₂F₅)₂P(O)OC₂H₅ mit 83 % Ausbeute (detektiert mittels ³¹P und ¹⁹F NMR) wird festgestellt. Bis(pentafluorethyl)-phosphinsäureethylester, (C₂F₅)₂P(O)OC₂H₅, als klare und farblose Flüssigkeit mit der in Beispiel 12 A beschriebenen Methode isoliert werden.

### D) CsF als Katalysator

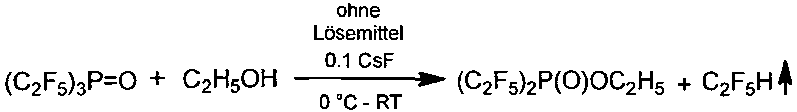

In einem 100 ml Glaskolben wird Cäsiumfluorid (0.149 g; 1.0 mmol) in Tris(pentafluorethyl)phosphinoxid, (C₂F₅)₃P=O, (3.732 g; 9.2 mmol) suspendiert, gekühlt (0 °C) und trockenes Ethanol (0.481 g; 10.4 mmol) zugegeben. Die klare und farblose Reaktionslösung wird 1 h bei 0 °C gerührt, erwärmt und 3.5 h bei Raumtemperatur gerührt. Die Bildung von (C₂F₅)₂P(O)OC₂H₅ mit 84 % Ausbeute (detektiert mittels ³¹P und ¹⁹F NMR) wird festgestellt. Bis(pentafluorethyl)-phosphinsäureethylester, (C₂F₅)₂P(O)OC₂H₅, kann als klare und farblose Flüssigkeit mit der in Beispiel 12 A beschriebenen Methode isoliert werden.

### E) [N(CH₃)₄]F als Katalysator

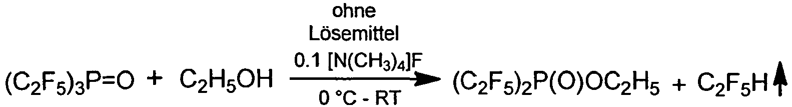

In einem 25 ml Glaskolben wird Tetramethylammoniumfluorid (0.095 g; 1.0 mmol) in Tris(pentafluorethyl)phosphinoxid, (C₂F₅)₃P=O, (3.835 g; 9.5 mmol) suspendiert, gekühlt (0 °C) und trockenes Ethanol (0.502 g; 10.9 mmol) zugegeben. Die klare und farblose Reaktionssuspension wird 1 h bei 0 °C gerührt, erwärmt und 3.5 h bei Raumtemperatur gerührt. Die Bildung von (C₂F₅)₂P(O)OC₂H₅ mit 93 % Ausbeute (detektiert mittels ³¹P und ¹⁹F NMR) wird festgestellt. Bis(pentafluorethyl)-phosphinsäureethylester, (C₂F₅)₂P(O)OC₂H₅, kann als klare und farblose Flüssigkeit mit der in Beispiel 12 A beschriebenen Methode isoliert werden.

Das isolierte Produkt wird mittels ¹H, ¹⁹F und ³¹P NMR-Spektren in CD₃CN charakterisiert.
¹H NMR: δ in ppm: 0.79 t (3H), ³*J*_{H,H} = 7.2 Hz, 3.91 d,q (2H), ³*J*_{H,H} = 7.2 Hz, ³*J*_{H,P} = 8.2 Hz.
¹⁹F NMR: δ in ppm: -82.9 m (6F), -126.1 m (4F).
³¹P NMR: δ in ppm: 8.5 quin,m, ²*J*_{F,P} = 89.2 Hz.

### Beispiel 13.

### Darstellung von Bis(pentafluorethyl)phosphinsäurepentadeuteroethylester, (C₂F₅)₂P(O)OC₂D₅:

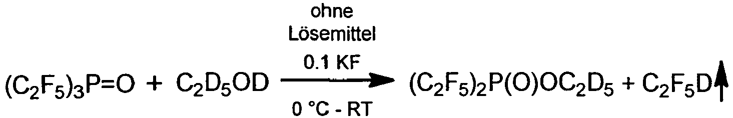

In einem 100 ml Glaskolben wird Kaliumfluorid (0.105 g; 1.8 mmol) in gekühltem (0 °C) Tris(pentafluorethyl)phosphinoxid, (C₂F₅)₃P=O, (6.727 g; 16.7 mmol) suspendiert und Hexadeuteroethanol (0.928 g; 17.8 mmol) wird zugegeben. Die klare und farblose Reaktionslösung wird 1 h bei 0 °C gerührt, erwärmt und 5 h bei Raumtemperatur gerührt. Nach Umkondensation im Vakuum (10⁻³ mbar) bei Raumtemperatur wird Bis(pentafluorethyl)phosphinsäurepentadeuteroethylester, (C₂F₅)₂P(O)OC₂D₅, als klare und farblose Flüssigkeit (4.40 g; 13.1 mmol) in 78 %-iger Ausbeute und 96 %-iger Reinheit isoliert.

Das isolierte Produkt wird mittels ⁹¹F und ³¹P NMR-Spektren in CD₃CN charakterisiert.
¹⁹F NMR: δ in ppm: -82.9 m (6F), -126.2 m (4F).
³¹P NMR: δ in ppm: 8.3 quin, m, ²*J*_{F,P} = 88.1 Hz.

### Beispiel 14. Darstellung von Ethylmethylphenylsulfoniumbis(pentafluorethyl)phosphinat, [(CH₃)(C₂H₅)(C₆H₅)S][(C₂F₅)₂P(O)O]:

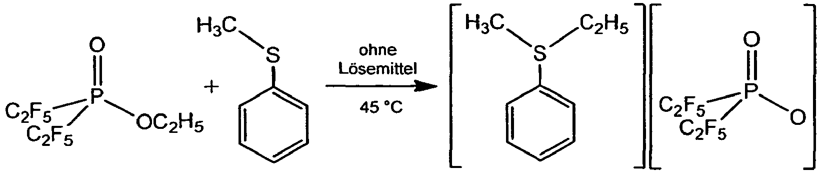

In einem 25 ml Glaskolben wird Bis(pentafluorethyl)phosphinsäureethylester, (C₂F₅)₂P(O)OC₂H₅, (4.247 g; 12.9 mmol) zu Thioanisol (1.553 g; 12.5 mmol) zugegeben. Die Reaktionsemulsion wird erwärmt und 9 h bei 45 °C gerührt. Es bildet sich die höher viskose, klare und farblose Flüssigkeit. Die leichtflüchtigen Bestandteile werden im Vakuum (10⁻³ mbar) bei Raumtemperatur entfernt. Ethylmethylphenylsulfonium-bis(pentafluorethyl)phosphinat, [(CH₃)(C₂H₅)(C₆H₅)S][(C₂F₅)₂P(O)O], (5.63 g; 12.4 mmol) wird als farblose, hoch viskose Flüssigkeit in quantitativer Ausbeute und 98 %-iger Reinheit isoliert.
¹H NMR in CD₃CN: δ in ppm: 7.99 d, m (2H), ³*J*_{H,H} = 7.6 Hz, 7.83 t, m (1H), ³*J*_{H,H} = 7.4 Hz, 7.73 t, m (2H), ³*J*_{H,H} = 7.9 Hz, 3.66 m (2H), 3.24 s (3H), 1.28 t (3H), ³*J*_{H,H} = 7.4 Hz.
¹⁹F NMR in CD₃CN: δ in ppm: -81.3 s (6F), -126.1 d (6F), ²*J*_{F,P} = 66.4 Hz. ³¹P NMR in CD₃CN: δ in ppm: -1.4 quin,m, ²*J*_{F,P} = 66.8 Hz.

### Elementaranalyse

Experimentell, %: C 34.08, H 2.84 und S 6.74;
berechnet für C₁₃H₁₃F₁₀O₂PS, %: C 34.37, H 2.88 und S 7.06.

### Beispiel 15.

### Darstellung von 1-Ethyl-3-methylimidazoliumbis(pentafluorethyl)phosphinat, [EMIMI[(C₂F₅)₂P(O)O]:

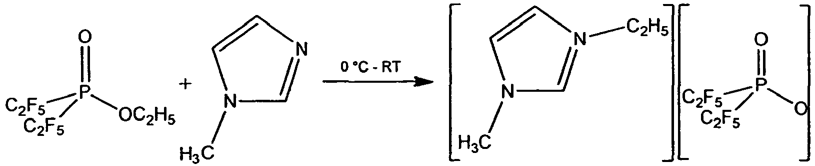

In einem 25 ml Glaskolben wird Bis(pentafluorethyl)phosphinsäureethylester, (C₂F₅)₂P(O)OC₂H₅, (4.59 g; 13.9 mmol) langsam zu trocknem und gekühltem (0 °C) *N*-Methylimidazol (1.10 g; 13.4 mmol) zugetropft (exotherm). Nach 45 Minuten bildet sich ein schwach gelb gefärbter Feststoff. Die Reaktionsmischung wird erwärmt bis Raumtemperatur, mit 4 ml *n*-Hexan verdünnt und 45 Minuten gerührt. Die leichtflüchtigen Bestandteile werden im Vakuum (10⁻³ mbar) bei 40 °C entfernt. 1-Ethyl-3-methylimidazoliumbis(pentafluorethyl)phosphinat, [EMIM][(C₂F₅)₂P(O)O], (5.52 g; 13.4 mmol) wird als hoch viskose, schwach gelb gefärbte Flüssigkeit in quantitativer Ausbeute und 99 %-iger Reinheit isoliert.
¹H NMR in CD₃CN: δ in ppm: 8.92 s (1 H), 7.53 d,d (1 H), ³*J*_{H,H} = 1.8 Hz; 7.45 d,d (1H), ³*J*_{H,H} = 1.8 Hz; 4.21 q (2H), ³*J*_{H,H} = 7.3 Hz, 3.86 s (3H), 1.47 t (3H), ³*J*_{H,H} = 7.3.
¹⁹F NMR in CD₃CN: ö in ppm: -81.5 m (6F), -126.2 d (4F), ²*J*_{F,P} = 66.4 Hz.
³¹P NMR in CD₃CN: δ in ppm: -1.2 quin,m, ²*J*_{F,P} = 66.7 Hz.

### Elementaranalyse

Experimentell, %: N 6.78, C 28.86 und H 2.78;
berechnet für C₁₀H₁₁F₁₀N₂O₂P, %: N 6.80, C 29.14 und H 2.69.

### Viskositätsmessung

dynamische Viskosität: η = 128 mPa·s (20 °C)
kinematische Viskosität: v = 84 mm²/s (20 °C)
Dichte: p = 1.527 g/cm³ (20 °C)

### Beispiel 16.

### Darstellung von N-Ethylpyridiniumbis(pentafluorethyl)phosphinat, [EPyl[(C₂F₅)₂P(O)O]:

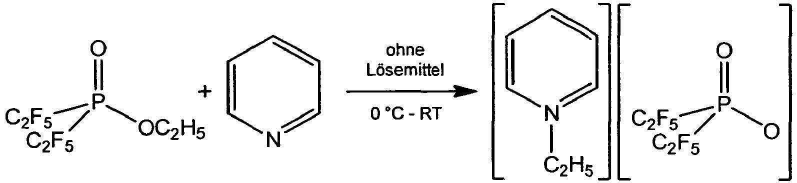

In einem 25 ml Glaskolben wird Bis(pentafluorethyl)phosphinsäure-ethylester, (C₂F₅)₂P(O)OC₂H₅, (3.956 g; 12.0 mmol) langsam zu trocknem und gekühltem (0 °C) Pyridin (0.941 g; 11.9 mmol) zugetropft. Es bildet sich spontan eine schwach gelb gefärbte, höher viskose Lösung. Nach 30 Minuten bei 0 °C und 6 h bei Raumtemperatur ist die Reaktionslösung braun-orange gefärbt. Die leichtflüchtigen Bestandteile werden im Vakuum (10⁻³ mbar) bei 40 °C entfernt. *N*-Ethylpyridiniumbis(pentafluorethyl)-phosphinat, [EPy][(C₂F₅)₂P(O)O], (4.845 g; 11.8 mmol) kann als hoch viskose, intensiv braun-orange gefärbte Flüssigkeit in quantitativer Ausbeute und 99 %-iger Reinheit isoliert werden.
¹H NMR in CD₃CN: ö in ppm: 8.88 d (2H), ³*J*_{H,H} = 5.7 Hz, 8.54 t,t (1H), ³*J*_{H,H} = 7.8 Hz, ⁴*J*_{H,H} = 1.2 Hz, 8.05 m (2H), 4.64 q (2H), ³*J*_{H,H} = 7.4, 1.61 t (3H), ³*J*_{H,H} = 7.3 Hz.
¹⁹F NMR in CD₃CN: δ in ppm: -81.4 m (6F), -126.1 d (4F), ²*J*_{F,P} = 66.1 Hz.
³¹P NMR in CD₃CN: δ in ppm: -1.3 quin,m, ²*J*_{F,P} = 66.1 Hz.

### Elementaranalyse

Experimentell, %: N 3.40, C 32.28 und H 2.76;
berechnet für C₁₁H₁₀F₁₀NO₂P, %: N 3.42, C 32.29 und H 2.46.

### Viskositätsmessung

dynamische Viskosität: η = 97 mPa·s (20 °C)
kinematische Viskosität: v = 63 mm²/s (20 °C)
Dichte: ρ = 1.537 g/cm³ (20 °C)

### Beispiel 17

### Darstellung von Tributylethylphosphoniumbis(pentafluorethyl)-phosphinat, [(C₄H₉)₃PC₂H₅][(C₂F₅)₂P(O)O]:

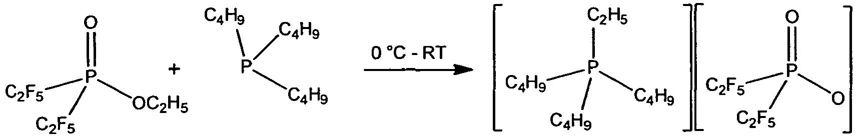

In einem 25 ml Glaskolben wird Bis(pentafluorethyl)phosphinsäure-ethylester (1.538 g; 4.7 mmol) zu gekühltem (0 °C) Tributylphosphin (0.953 g; 4.7 mmol) gegeben. Das Reaktionsgemisch wird 1 h bei 0 °C gerührt, wobei zunächst ein zweiphasiges System und später die Bildung eines Feststoffes zu beobachten ist. Das Reaktionsgemisch wird mit 10 ml *n-*Hexan verdünnt, erwärmt und 5.5 h bei Raumtemperatur gerührt. Die leichtflüchtigen Bestandteile werden im Vakuum (10⁻³ mbar) bei 35 °C entfernt. Tributylethylphosphoniumbis(pentafluorethyl)phosphinat, [(C₄H₉)₃PC₂H₅][(C₂F₅)₂P(O)O], (2.262 g; 4.2 mmol) wird als farbloser Feststoff in 89 %-iger Ausbeute und 98 %-iger Reinheit isoliert.

Das isolierte Produkt wird mittels ¹H, ¹⁹F und ³¹P NMR-Spektren in CD₃CN charakterisiert.
¹H NMR: δ in ppm: 2.13 m (8H), 1.50 m (12H), 1.20 d,t (3H), ³*J*_{H,P} = 18.2 Hz, ³*J*_{H,H} = 7.6 Hz; 0.97 t (9H), ³*J*_{H,H} = 7.1 Hz.
¹⁹F NMR: δ in ppm: -81.4 m (6F), -126.1 d (4F), ²*J*_{F,P} = 65.4 Hz.
³¹P NMR: δ in ppm: 35.4 m (1P); -1.7 quin,m, ²*J*_{F,P} = 65.3 Hz.
**Schmelzpunkt:** 44 °C

### Elementaranalyse

Experimentell, %: C 41.20 und H 6.44;
berechnet für C₁₈H₃₂F₁₀NO₂P₂, %: C 40.61 und H 6.06

### Beispiel 18.

### Darstellung von Bis(pentafluorethyl)phosphinsäure-2-(allyloxy)ethylester, (C₂F₅)₂P(O)OCH₂CH₂OCH₂CH=CH₂:

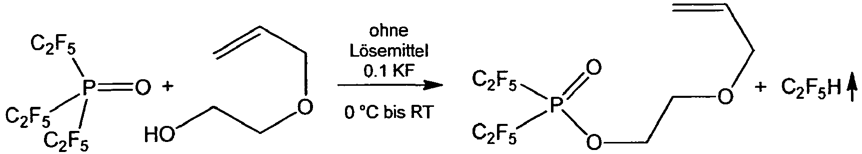

In einem 100 ml Glaskolben wird Kaliumfluorid (0.277 g; 4.8 mmol) in Tris(pentafluorethyl)phosphinoxid, (C₂F₅)₃P=O, (16.783 g; 41.5 mmol) suspendiert, gekühlt (0 °C) und 2-Allyloxyethanol (4.188 g; 41.0 mmol) zugegeben. Die zweiphasige Reaktionssuspension wird 3 h bei 0 °C und 20 h bei Raumtemperatur gerührt. Nach Umkondensation im Vakuum (10⁻³ mbar) bei 50 °C (ab 40 °C ist Zersetzung zu beobachten) und anschließender fraktionierter Destillation bei verminderten Druck (Sdp.: 40 bis 42 °C bei 3.8·10⁻³ mbar) kann Bis(pentafluorethyl)phosphinsäure-2-(allyloxy)ethylester, (C₂F₅)₂P(O)OCH₂CH₂OCH₂CH=CH₂, als klare und farblose Flüssigkeit (7.083 g; 18.3 mmol) in 45 %-iger Ausbeute und 96 %-iger Reinheit isoliert werden. Das Produkt wird bei -20 °C gelagert.
¹H NMR in CD₃CN: δ in ppm: 5.93 m (1 H), 5.32 d,m (1 H), ³*J*_{*trans*(H,H)} = 17.1 Hz; 5.20 d,m (1 H), ³*J*_{*cis*(H,H)} = 10.5 Hz, 4.69 m (2H); 4.04 d,m (2H), ³*J*_{H,H} = 5.5 Hz, 3.75 m (2H).
¹⁹F NMR in CD₃CN: δ in ppm: -81.3 m (6F), -124.4 m (4F).
³¹P NMR in CD₃CN: δ in ppm: 8.8 quin,m, ²*J*_{F,P} = 88.4 Hz.

### Beispiel 19.

### Darstellung von N-[2-(Allytoxy)ethyl]pyridiniumbis(pentafluorethyl)phosphinat, [CH₂=CHCH₂OCH₂CH₂Py][(C₂F₅)₂P(O)O]:

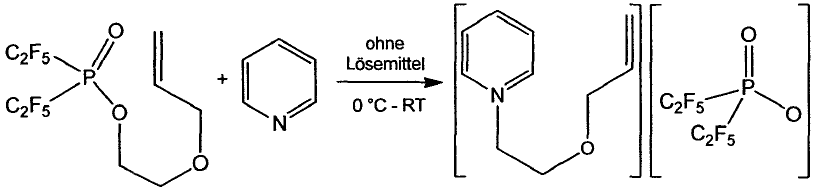

In einem 25 ml Glaskolben wird Bis(pentafluorethyl)phosphinsäure-2-(allyloxy)ethylester, (C₂F₅)₂P(O)OCH₂CH₂OCH₂CH=CH₂, (2.407 g; 6.2 mmol) langsam zu trocknem und gekühltem (0 °C) Pyridin (0.502 g; 6.3 mmol) zugetropft. Es bildet sich spontan eine orange gefärbte, höher viskose Lösung, die 1 h bei 0 °C gerührt, erwärmt und 2 h bei Raumtemperatur gerührt wird. Die leichtflüchtigen Bestandteile werden im Vakuum (10⁻³ mbar) bei Raumtemperatur entfernt. *N*-[2-(Allyloxy)ethyl]-pyridiniumbis(pentafluorethyl)phosphinat, [CH₂=CHCH₂OCH₂CH₂Py][(C₂F₅)₂P(O)O], wird (2.829 g; 6.1 mmol) als hoch viskose, intensiv rot-braun gefärbte Flüssigkeit in quantitativer Ausbeute und 89 %-iger Reinheit isoliert werden.
¹H NMR in CD₃CN: δ in ppm: 8.87 d,m (2H), ³*J*_{H,H} = 5.4 Hz, 8.57 t,t (1H), ³*J*_{H,H} = 7.8 Hz, ⁴*J*_{H,H} = 1.3 Hz, 8.07 t (2H), ³*J*_{H,H} = 7.1 Hz, 5.80 m (1H), 5.19 d,m (1H), ³*Jₜᵣₐₙₛ*(_{H,H}) = 17.3 Hz, 5.14 d,m (1H), ³*J_{cis}(*_{H,H}) = 10.5 Hz, 4.78 m (2H), 3.97 d,m (2H), ³*J*_{H,H} = 5.4 Hz; 3.90 t (2H), ³*J*_{H},_{H} = 4.9 Hz.
¹⁹F NMR in CD₃CN: δ in ppm: -81.4 m (6F), -126.1 d (4F), ²*J*_{F,P} = 66.2 Hz.
³¹P NMR in CD₃CN: δ in ppm: -1.3 quin,m, ²*J*_{F,P} = 66.2 Hz.

### Elementaranalyse

Experimentell, %: N 3.01, C 36.14 und H 3.03;
berechnet für C₁₄H₁₄F₁₀NO₃P, %: N 2.80, C 35.96 und H 3.10.

### Beispiel 20.

### Darstellung von 3-[2-(Allyloxy)ethyl]-1-methylimidazolium-bis(pentafluorethyl)phosphinat, [CH₂=CHCH₂OCH₂CH₂MIM][(C₂F₅)₂P(O)O]:

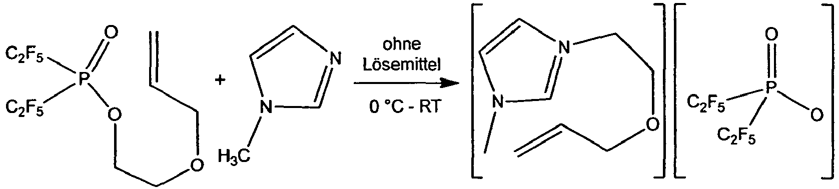

In einem 50 ml Glaskolben wird Bis(pentafluorethyl)phosphinsäure-2-(allyloxy)ethylester, (C₂F₅)₂P(O)OCH₂CH₂OCH₂CH=CH₂, (4.135 g; 10.7 mmol) langsam zu trocknem und gekühltem (0 °C) *N*-Methylimidazol (0.793 g; 9.7 mmol) zugetropft (exotherm). Es bildet sich spontan eine schwach gelb gefärbte, höher viskose Lösung, die 1.5 h bei 0 °C gerührt, erwärmt und 5 h bei Raumtemperatur gerührt wird. Die leichtflüchtigen Bestandteile werden im Vakuum (10⁻³ mbar) bei Raumtemperatur entfernt. 3-[2-(Allyloxy)ethyl]-1-methylimidazoliumbis(pentafluorethyl)phosphinat, [CH₂=CHCH₂OCH₂CH₂MIM][(C₂F₅)₂P(O)O], (4.521 g; 9.7 mmol) wird als hoch viskose, schwach gelb gefärbte Flüssigkeit in quantitativer Ausbeute und 94 %-iger Reinheit isoliert.
¹H NMR in CD₃CN: δ in ppm: 8.81 s (1 H), 7.51 d,d (1 H), ⁴*J*_{H},_{H} = 1.8 Hz, 7.45 d,d (1H), ⁴*J*_{H},_{H} = 1.8 Hz, 5.88 m (1H), 5.25 d,m (1 H), ³*Jₜᵣₐₙₛ*(H,H) = 17.3 Hz; 5.17 d,m (1 H), ³*J_{cis}*(_{H},_{H}) = 10.5 Hz, 4.35 m (2H), 4.00 d,m (2H), ³*J*_{H},_{H} = 5.5 Hz, 3.88 s (3H), 3.76 m (2H).
¹⁹F NMR in CD₃CN: δ in ppm: -81.4 m (6F), -126.2 d (4F), ²*J*_{F,P} = 66.6 Hz.
³¹P NMR in CD₃CN: δ in ppm: -1.3 quin,m, ²*J*_{F,P} = 66.8 Hz.

### Elementaranalyse

Experimentell, %: N 5.78, C 33.09 und H 3.17;
berechnet für C₁₃H₁₅F₁₀N₂O₃P, %: N 5.98, C 33.34 und H 3.23.

### Beispiel 21.

### Darstellung von Bis(pentafluorethyl)phosphinsäure-2-(2',2',2'-trifluorethoxy)ethylester, (C₂F₅)₂P(O)OCH₂CH₂OCH₂CF₃:

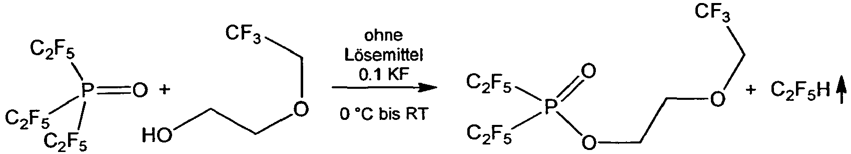

In einem 100 ml Glaskolben wird Kaliumfluorid (0.228 g; 3.9 mmol) in Tris(pentafluorethyl)phosphinoxid, (C₂F₅)₃P=O, (14.697 g; 36.4 mmol) suspendiert, gekühlt (0 °C) und 2,2,2-Trifluorethoxyethanol (5.184 g; 36.0 mmol) zugegeben. Die weiße Reaktionssuspension wird 2 h bei 0 °C und 21.5 h bei Raumtemperatur gerührt. Nach Umkondensation im Vakuum (10-³ mbar) bei 70 °C und anschließender fraktionierter Destillation bei verminderten Druck (Sdp.: 27 bis 28 °C bei 1·10⁻³ mbar) wird Bis(pentafluorethyl)phosphinsäure-2-(2',2',2'-trifluorethoxy)ethylester, (C₂F₅)₂P(O)OCH₂CH₂OCH₂CF₃, als klare und farblose Flüssigkeit (6.041 g; 14.1 mmol) in 39 %-iger Ausbeute und 96 %-iger Reinheit isoliert. Nach wenigen Minuten ist Zersetzung zu beobachten. Das Produkt wird bei -20 °C gelagert.
¹H NMR in CD₃CN: δ in ppm: 4.70 m (2H), 4.00 q (2H), ³*J*_{H,F} = 8.9 Hz, 3.95 m (2H).
¹⁹F NMR in CD₃CN: δ in ppm: -75.3 t (3F), ³*J*_{H,F} = 8.9 Hz; -81.3 m (6F); - 124.5 m (4F).
³¹P NMR in CD₃CN: δ in ppm: 9.0 quin,m, ²*J*_{F,P} = 88.6 Hz.

### Beispiel 22.

### Darstellung von 1-Methyl-3-(2-(2',2',2'-trifluorethoxy)ethylimidazolium-bis(pentafluorethyl)phosphinat, [CF₃CH₂OCH₂CH₂MIM][(C₂F₅)₂P(O)O]:

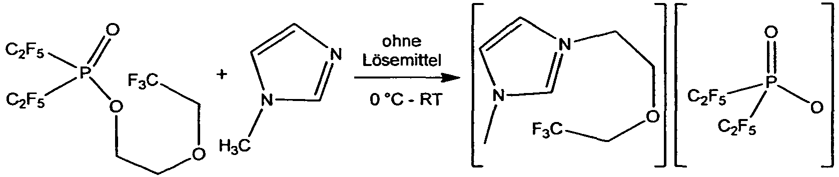

In einem 10 ml Glaskolben wird Bis(pentafluorethyl)phosphinsäure-2-(2',2',2'-trifluorethoxy)ethylester, (C₂F₅)₂P(O)OCH₂CH₂OCH₂CF₃, (3.589 g; 8.4 mmol) langsam zu trocknem und gekühltem (0 °C) *N*-Methylimidazol (0.726 g; 8.8 mmol) zugetropft. Es bildet sich spontan eine schwach gelb gefärbte, höher viskose Lösung, die 1 h bei 0 °C gerührt, erwärmt und 3 h bei Raumtemperatur gerührt wird. Die leichtflüchtigen Bestandteile werden im Vakuum (10⁻³ mbar) bei Raumtemperatur entfernt. 1-Methyl-3-[2-(2',2',2'-trifluorethoxy)ethylimidazoliumbis(pentafluorethyl)phosphinat, [CF₃CH₂OCH₂CH₂MIM][(C₂F₅)₂P(O)O], (4.253 g; 8.3 mmol) wird als hoch viskose, schwach gelb gefärbte Flüssigkeit in quantitativer Ausbeute und 95 %-iger Reinheit isoliert.
¹H NMR in CD₃CN: ö in ppm: 8.84 s (1 H), 7.51 d,d (1 H), ⁴*J*_{H,H} = 1.8 Hz, 7.46 d,d (1H), ⁴*J*_{H,H} = 1.8 Hz, 4.39 m (2H), 4.00 q (2H), ³*J*_{H,F} = 9.0 Hz, 3.98 t (2H), ³*J*_{H,H} = 4.8 Hz, 3.88 s (3H).
¹⁹F NMR in CD₃CN: δ in ppm: -75.3 t (3H), ³*J*_{H,F} = 9.0 Hz, -81.5 m (6F), - 126.2 d (4F), ²*J*_{F,P} = 66.4 Hz.
³¹P NMR in CD₃CN: δ in ppm: -1.3 quin,m, ²*J*_{F,P} = 66.4 Hz.

### Elementaranalyse

Experimentell, %: N 5.53, C 28.77 und H 2.40;
berechnet für C₁₂H₁₂F₁₃N₂O₃P, %: N 5.49, C 28.25 und H 2.37.

### Beispiel 23

### Darstellung von Bis(pentafluorethyl)phosphinsäurephenylester, (C₂F₅)₂P(O)OC₆C₅:

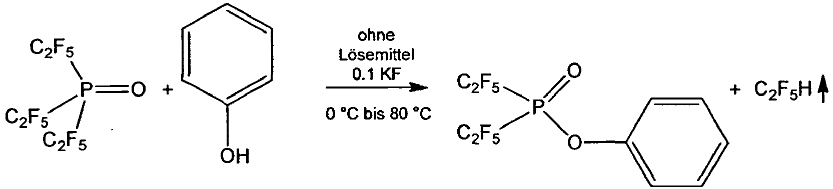

In einem 100 ml Glaskolben wird Kaliumfluorid (0.122 g; 2.1 mmol) in gekühltem (0 °C) Tris(pentafluorethyl)phosphinoxid (7.378 g; 18.3 mmol) suspendiert und Phenol (1.797 g; 19.1 mmol) wird zugegeben. Die Reaktionssuspension wird erwärmt und 4.5 h bei 80 °C gerührt. Danach ist eine schwach braun gefärbte Reaktionssuspension zu beobachten. Nach Umkondensation im Vakuum (10⁻³ mbar) bei 40 °C wird Bis(pentafluorethyl)phosphinsäurephenylester, (C₂F₅)₂P(O)OC₆H₅, als klare und farblose Flüssigkeit (3.127 g; 8.3 mmol) in 45 %-iger Ausbeute und 90 %-iger Reinheit isoliert.

Das isolierte Produkt wird mittels ¹H, ¹⁹F und ³¹P NMR-Spektren in CD₃CN-Film charakterisiert.
¹H NMR: δ in ppm: 6.29 m (5H).
¹⁹F NMR: δ in ppm: -82.4 m (6F), -124.8 m (4F).
³¹P NMR: δ in ppm: 4.5 quin,m, ²*J*_{F,P} = 91.1 Hz.

### Beispiel 24.

### Darstellung von Bis(pentafluorethyl)phosphinsäure-9-decylester, (C₂F₅)₂P(O)OCH₂(CH₂)₇CH=CH₂:

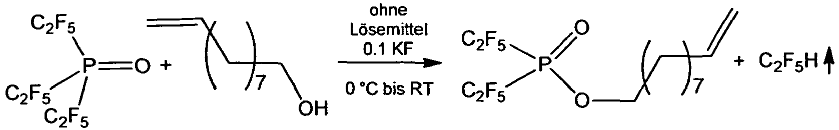

In einem 100 ml Glaskolben wird Kaliumfluorid (0.138 g; 2.4 mmol) in Tris(pentafluorethyl)phosphinoxid (9.26 g; 22.9 mmol) suspendiert und 9-Decen-1-ol (3,387 g; 21,7 mmol) wird zugegeben. Während der Zugabe erwärmt sich das Reaktionsgemisch und wird gekühlt (0 °C). Nach vollständiger Zugabe wird die orange gefärbte Reaktionslösung erwärmt und 20 h bei Raumtemperatur gerührt. Durch fraktionierter Destillation bei verminderten Druck (Sdp.: 70 bis 74 °C bei 2.5·10⁻¹ mbar) wird Bis(pentafluorethyl)phosphinsäure-9-decylester, (C₂F₅)₂P(O)OCH₂(CH₂)₇CH=CH₂, als klare und farblose Flüssigkeit (4.66 g; 10.6 mmol) in 49 %-iger Ausbeute und 94 %-iger Reinheit isoliert.

Das isolierte Produkt wird mittels ¹H, ¹⁹F und ³¹P NMR-Spektren in CD₃CN charakterisiert.
¹H NMR: δ in ppm: 5.85 m (1H), 5.02 d,m (1H), ³*Jₜᵣₐₙₛ*(_{H,H}) = 17.1 Hz, 4.98 d, m (1H), ³*J_{cis}*(_{H,H}) = 10.2 Hz, 4.61 d, t (2H), ³*J*(_{H,P}) = 7.3 Hz, ³*J*(_{H,H}) = 6.4 Hz, 2.07 m (2H), 1.82 m (2H), 1.34 m (10H).
¹⁹F NMR: δ in ppm: -79.5 m (6F), -122.7 m (4F).
³¹P NMR: δ in ppm: 7.5 quin, m, ²*J*_{F,P} = 88.0 Hz.

### Beispiel 25.

### Darstellung von Bis(pentafluorethyl)phosphinsäurepropargylester, (C₂F₅)₂P(O)OCH₂C≡CH:

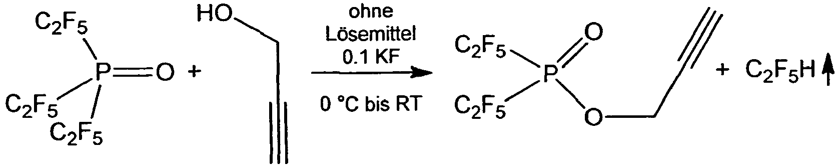

In einem 100 ml Glaskolben wird Kaliumfluorid (0.262 g; 4.5 mmol) in gekühltem (0 °C) Tris(pentafluorethyl)phosphinoxid (14.930 g; 37.0 mmol) suspendiert und Propargylalkohol (2.055 g; 36.7 mmol) wird zugegeben. Die gelb gefärbte Reaktionslösung wird langsam (*ca*. 6 h) erwärmt und 19.5 h bei Raumtemperatur gerührt. Flüchtige Komponenten werden im Vakuum (10⁻³ mbar) bei 0 °C entfernt. Nach Umkondensation im Vakuum (10⁻³ mbar) bei Raumtemperatur wird Bis(pentafluorethyl)phosphinsäure-propargylester, (C₂F₅)₂P(O)OCH₂C≡CH, als klare und farblose Flüssigkeit (7.831 g; 23.0 mmol) in 63 %-iger Ausbeute und 95 %-iger Reinheit isoliert. Nach wenigen Minuten bei Raumtemperatur färbt sich der Ester braun und wird daher bei 3 °C gelagert.

Das isolierte Produkt wird mittels ¹H, ¹⁹F und ³¹P NMR-Spektren in CD₃CN-Film charakterisiert.
¹H NMR: δ in ppm: 4.48 d, d (2H), ³*J*(_{H,P}) = 10.3 Hz, ⁴*J*(_{H,H}) = 2.2 Hz, 2.29 m (1H).
¹⁹F NMR: δ in ppm: -82.5 m (6F), -125.4 m (4F).
³¹P NMR: δ in ppm: 10.1 quin, m, ²*J*_{F,P} = 90.6 Hz.

### Beispiel 26.

### Darstellung von 1-Propargyl-3-methylimidazoliumbis(pentafluorethyl)-phosphinat, [CH≡CCH₂MIM][(C₂F₅)₂P(O)O]:

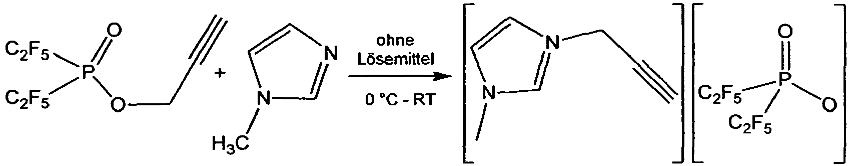

In einem 100 ml Glaskolben wird Bis(pentafluorethyl)phosphinsäure-propargylester (11.18 g; 32.9 mmol) langsam zu gekühltem (0 °C) *N-*Methylimidazol (2.22 g; 27.1 mmol) zugetropft. In einer exothermen Reaktion wird ein orange gefärbter Feststoff gebildet, der erwärmt und 1.5 h bei Raumtemperatur gerührt wird. Nach Trocknung im Vakuum (10⁻³ mbar) bei Raumtemperatur wird 1-Propargyl-3-methylimidazolium-bis(pentafluorethyl)phosphinat, [CH≡CCH₂MIM][(C₂F₅)₂P(O)O], (11.14 g; 26.3 mmol) als schwach orange gefärbter Feststoff in 99 %-iger Ausbeute und 97 %-iger Reinheit isoliert. Der gefärbte Feststoff kann mit Dichlormethan und *n*-Hexan farblos gewaschen werden.

Das isolierte Produkt wird mittels ¹H, ¹⁹F und ³¹P NMR-Spektren in CD₃CN charakterisiert.
¹H NMR: δ in ppm: 8.72 br.s (1 H), 7.51 m (1 H), 7.42 m (1 H), 5.03 d (2H), ⁴*J*_{H,H} = 2.5 Hz, 3.87 s (3H), 3.07 t (1H), ⁴*J*_{H,H} = 2.5 Hz.
¹⁹F NMR: δ in ppm: -81.5 m (6F), -126.2 d (4F), ²*J*_{F,P} = 65.3 Hz.
³¹P NMR: δ in ppm: -1.5 quin, ²*J*_{F,P} = 65.5 Hz.

### Elementaranalyse

Experimentell, %: N 6.55, C 31.21 und H 2.02;
berechnet für C₁₁H₉F₁₀N₂O₂P, %: N 6.64, C 31.30 und H 2.15

### Beispiel 27.

### Darstellung von 1-Methyl-1-propargylpyrrolidinium-bis(pentafluorethyl)phosphinat, [CH≡CCH₂MPL][(C₂F₅)₂P(O)O]:

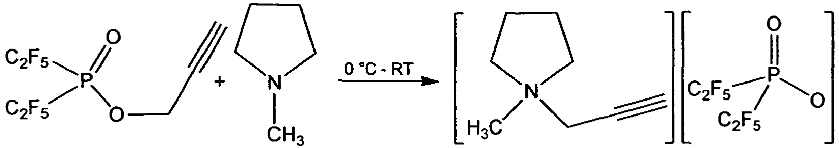

In einem 25 ml Glaskolben wird Bis(pentafluorethyl)phosphinsäure-propargylester (6.44 g; 18.9 mmol) zu gekühltem (0 °C) *N*-Methylpyrrolidin (1.60 g; 18.7 mmol) gegeben. In einer exothermen Reaktion bildet sich spontan ein gelb gefärbter Feststoff. Dieser wird in *n*-Hexan (12 ml) suspendiert, 30 Minuten bei 0 °C gerührt, erwärmt (Raumtemperatur), mit weiterem *n*-Hexan (8 ml) verdünnt und 17 h bei Raumtemperatur gerührt. Die leichtflüchtigen Bestandteile werden im Vakuum (10⁻³ mbar) bei 50 °C entfernt. 1-Methyl-1-propargylpyrrolidiniumbis(pentafluorethyl)phosphinat, [CH≡CCH₂MPL][(C₂F₅)₂P(O)O], (7.47 g; 17.6 mmol) wird als schwach beige gefärbter Feststoff in 94 %-iger Ausbeute und 98 %-iger Reinheit isoliert werden.

Das isolierte Produkt wird mittels ¹H, ¹⁹F und ³¹P NMR-Spektren in CD₃CN charakterisiert.
¹H NMR: δ in ppm: 4.21 d (2H), ⁴*J*_{H,H} = 2.5 Hz, 3.56 m (4H), 3.20 t (1H), ⁴*J*_{H,H} = 2.5 Hz, 3.14 s (3H), 2.21 m (4H).
¹⁹F NMR: δ in ppm: -81.5 m (6F), -126.1 d (4F), ²*J*_{F,P} = 65.9 Hz.
³¹P NMR: δ in ppm: -1.5 quin, m, ²*J*_{F,P} = 65.9 Hz.
**Schmelzpunkt:** 70 °C

### Elementaranalyse

Experimentell, %: N 3.30, C 34.11 und H 3.34;
berechnet für C₁₂H₁₄F₁₀NO₂P, %: N 3.29, C 33.90 und H 3.32

### Beispiel 28.

### Darstellung von Trioctylpropargylammoniumbis(pentafluorethyl)phosphinat, [(C₈H₁₇)₃NCH₂C≡CH][(C₂F₅)₂P(O)O]:

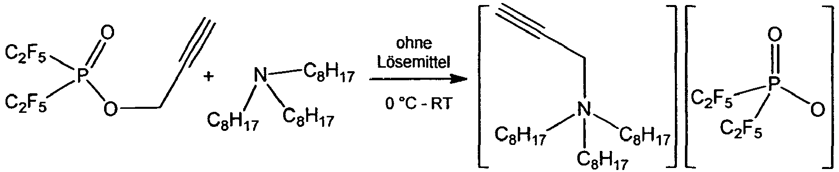

In einem 100 ml Glaskolben wird Bis(pentafluorethyl)phosphinsäurepropargylester (4.131 g; 12.1 mmol) langsam zu gekühltem (0 °C) Trioctylamin (4.333 g; 12.3 mmol) zugetropft. Es bildet sich spontan eine orange gefärbte, höher viskose Lösung, die auf Raumtemperatur erwärmt wird. Die leichtflüchtigen Bestandteile werden im Vakuum (10⁻³ mbar) bei Raumtemperatur bis 120 °C entfernt. Trioctylpropargylammoniumbis(pentafluorethyl)phosphinat, [(C₈H₁₇)₃NCH₂C≡CH][(C₂F₅)₂P(O)O], (7.646 g; 11.0 mmol) wird als schwach orange gefärbte Flüssigkeit in 91 %-iger Ausbeute und 97 %-iger Reinheit isoliert werden.

Das isolierte Produkt wird mittels ¹H, ¹⁹F und ³¹P NMR-Spektren in CD₃CN charakterisiert.
¹H NMR: δ in ppm: 4.11 m (2H); 3.25 m (6H); 2.92 m (1H); 1.67 m (6H); 1.34 m (30H); 0.92 M (9H).
¹⁹F NMR: δ in ppm: -81.4 m (6F), -126.1 d (4F), ²*J*_{F,P} = 66.0 Hz.
³¹P NMR: δ in ppm: -1.7 quin m, ²*J*_{F,P} = 66.0 Hz.

### Elementaranalyse

Experimentell, %: N 2.03, C 54.79 und H 8.08;
berechnet für C₃₁H₅₄F₁₀NO₂P, %: N 2.02, C 53.67 und H 7.85

### Beispiel 29.

### Darstellung von Bis(nonafluorbutyl)phosphinsäureethylester, (C₄F₉)₂P(O)OC₂H₅:

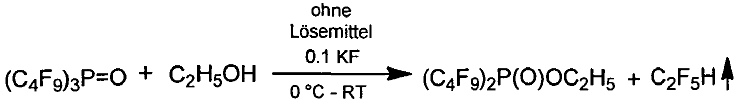

In einem 100 ml Glaskolben wird Kaliumfluorid (0.158 g; 8.9 mmol) in gekühltem (0 °C) Tris(nonafluorbutyl)phosphinoxid, (C₄F₉)₃P=O, (18.57 g; 26.4 mmol) suspendiert, und trockenes Ethanol (1.256 g; 27.3 mmol) wird zugegeben. Die klare und farblose Reaktionslösung wird 2 h bei 0 °C und 64.5 h bei Raumtemperatur gerührt und im Vakuum (10⁻³ mbar) bei Raumtemperatur bis 50 °C umkondensiert. Nach Umkondensation und anschließender fraktionierter Destillation im Vakuum (4.3 · 10-3 mbar) wird Bis(nonafluorbutyl)phosphinsäureethylester, (C₄F₉)₂P(O)OC₂H₅, als klare und farblose Flüssigkeit (4.82 g; 9.1 mmol) in 34 %-iger Ausbeute isoliert (Sdp.: 40-41 °C bei 4.3 · 10-3 mbar).

Das isolierte Produkt wird mittels ¹H, ¹⁹F und ³¹P NMR-Spektren in CD₃CN charakterisiert.
¹H NMR: δ in ppm: 3.78 d,q (2H, CH₂), ³*J*_{H,P} = ³*J*_{H,H} = 7.6 Hz, 0.64 t (3H, CH₃), ³*J*_{H,H} = 7.1 Hz.
¹⁹F NMR: δ in ppm: -84.0 t,m (6F, 2CF₃), ³*J*_{F,F} = 9.7 Hz, -122.2 m (8F, 4CF₂), -128.4 t,m (4F, 2CF₂), ³*J*_{F,F} = 13.7 Hz.
³¹P NMR: δ in ppm: 8.8 quin, ²*J*_{F,P} = 90.0 Hz.

### Beispiel 30.

### Darstellung von 1-Ethyl-3-methylimidazolium-bis(nonafluorbutyl)phosphinat, [EMIM][(C₄F₉)₂P(O)O]:

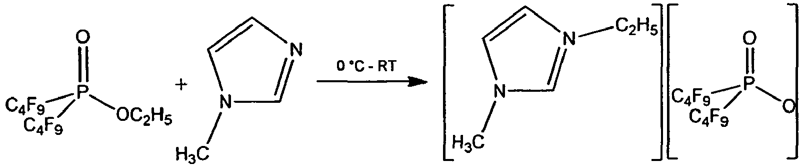

In einem 25 ml Glaskolben wird Bis(nonafluorbutyl)phosphinsäureethylester, (C₄F₉)₂P(O)OC₂H₅, (3.834 g; 7.2 mmol) langsam zu gekühltem (0 °C) *N*-Methylimidazol (0.458 g; 5.6 mmol) gegeben. Es sind eine exothermen Reaktion und zwei orange gefärbte Phasen zu beobachten. Nach wenigen Minuten bildet sich eine grün gefärbte, höher viskose Lösung. Diese wird 2.5 h bei 0 °C und 41 h bei Raumtemperatur gerührt. Durch Reinigung im Vakuum (10⁻³ mbar) bei Raumtemperatur bis 50 °C kann 1-Ethyl-3-methylimidazoliumbis(nonafluorbutyl)phosphinat, [EMIM][(C₄F₉)₂P(O)O], (3.233 g; 5.3 mmol) als hoch viskose, grün gefärbte Flüssigkeit in 95 %-iger Ausbeute und 95 %-iger Reinheit isoliert werden.

Das isolierte Produkt wird mittels ¹H, ¹⁹F und ³¹P NMR-Spektren in CD₃CN charakterisiert.
¹H NMR: δ in ppm: 8.82 br.s (1H), 7.48 m (1H); 7.41 m (1H), 4.21 q (2H), ³*J*_{H,H} = 7.4 Hz, 3.86 s (3H), 1.47 t (3H), ³*J*_{H,H} = 7.4 Hz.
¹⁹F NMR: δ in ppm: -81.5 t, m (6F), ³*J*_{F,F} = 9.9 Hz, -121.7 m (4F), -122.6 d, m (4F), ²*J*_{F,P} = 67.7 Hz, 126.5 m (4F).
³¹P NMR: δ in ppm: 0.1 quin, m ²*J*_{F,P} = 67.7 Hz.

### Elementaranalyse

Experimentell, %: N 4.05, C 26.79 und H 1.88;
berechnet für C₁₄H₁₁F₁₈N₂O₂P, %: N 4.58, C 27.47 und H 1.81

### Beispiel 31:

### Darstellung von Bis(pentafluorethyl)phosphinsäure-3-brompropylester, (C₂F₅)₂P(O)OCH₂CH₂CH₂Br:

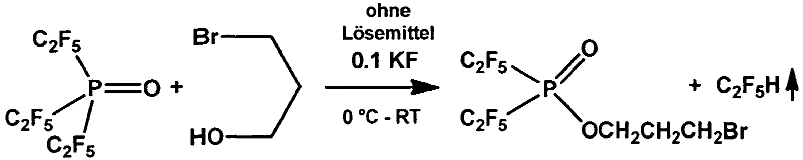

In einem 100 mL Glaskolben wird Kaliumfluorid (0.227 g; 3.9 mmol) in gekühltem (0 °C) Tris(pentafluorethyl)phosphinoxid, (C₂F₅)₃P=O, (13.773 g; 34.1 mmol) suspendiert und schwach gelb gefärbtes 3-Brompropan-1-ol (4.790 g; 34.5 mmol) wird zugegeben. Das zweiphasige Reaktionsgemisch wird erwärmt und 20 h bei Raumtemperatur gerührt. Nach Kondensation im Vakuum (10⁻³ mbar) bei Raumtemperatur und zweifacher fraktionierter Destillation bei verminderten Druck (Sdp.: 76 bis 78 °C bei 7.6 mbar) kann Bis(pentafluorethyl)phosphinsäure-3-brompropylester, (C₂F₅)₂P(O)OCH₂CH₂CH₂Br, als klare und farblose Flüssigkeit (5.137 g; 12.1 mmol) in 35 %-iger Ausbeute und 96 %-iger Reinheit isoliert werden.

Das isolierte Produkt wird mittels ¹H, ¹⁹F und ³¹P NMR-Spektren in CD₃CN charakterisiert.
¹H NMR: δ in ppm: 4.74 d, t (2H), ³*J*_{H,P} = 6.8 Hz, ³*J*_{H,H} = 6.0 Hz; 3.56 t (2H), ³*J*_{H,H} = 6.4 Hz; 2.36 quin, m (2H), ³*J*_{H,H} = 6.2 Hz.
¹⁹F NMR: δ in ppm: -81.2 m (6F); -124.3 m (4F).
³¹P NMR: δ in ppm: 8.9 quin, m, ²*J*_{F,P} = 88.5 Hz.

### Beispiel 32:

### Darstellung von Bis(pentafluorethyl)phosphinsäure-2,2,3,3,4,4,5,5-octafluorpentylester, (C₂F₅)₂P(O)OCH₂CF₂CF₂CF₂CF₂H:

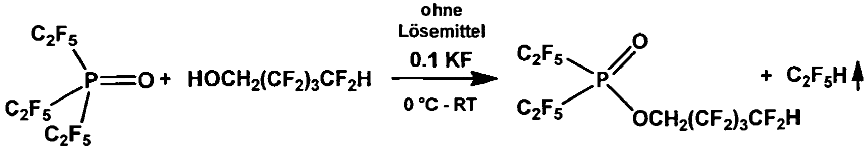

In einem 100 mL Glaskolben wird Kaliumfluorid (0.185 g; 3.2 mmol) in gekühltem (0 °C) Tris(pentafluorethyl)phosphinoxid, (C₂F₅)₃P=O, (9.957 g; 24.6 mmol) suspendiert und 2,2,3,3,4,4,5,5-Octafluorpentan-1-ol (5.491 g; 23.7 mmol) zugetropft. Die Reaktionssuspension wird erwärmt und 46.5 h bei Raumtemperatur gerührt. Nach Kondensation im Vakuum (10⁻³ mbar) bei Raumtemperatur bis 60 °C und zweifacher fraktionierter Destillation im Vakuum (6·10⁻³ mbar) (Sdp.: 31 bis 32 °C) kann Bis(pentafluorethyl)phosphinsäure-2,2,3,3,4,4,5,5-octafluorpentylester, (C₂F₅)₂P(O)OCH₂CF₂CF₂CF₂CF₂H, als klare und farblose Flüssigkeit (1.603 g; 3.1 mmol) in 13 %-iger Ausbeute und 98 %-iger Reinheit isoliert werden.

Das isolierte Produkt wird mittels ¹H, ¹⁹F und ³¹P NMR-Spektren in CD₃CN charakterisiert.
¹H NMR: δ in ppm: 6.44 t, t (1H), ²*J*_{H,F} = 51.1 Hz, ³*J*_{H,F} = 5.3 Hz; 5.11 t, d (2H), ³*J*_{H,F} = 12.9 Hz, ³*J*_{H,P} = 8.0 Hz.
¹⁹F NMR: δ in ppm: -81.3 m (6F); -121.7 m (2F); -123.8 m (4F); -125.5 m (2F); -130.7 m (2F); -139.4 d,m (2F), ²*J*_{H,F} = 51.1 Hz.
³¹P NMR: δ in ppm: 10.6 quin, m, ²*J*_{F,P} = 92.2 Hz.

### Beispiel 33:

### Darstellung von 1-(3-Brompropyl)-3-methylimidazolium bis(pentafluorethyl)phosphinat, [BrCH₂CH₂CH₂MIM][(C₂F₅)₂P(O)O]:

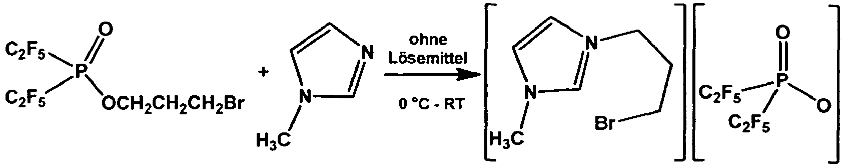

In einem 50 mL Glaskolben wird Bis(pentafluorethyl)phosphinsäure-3-brompropylester, (C₂F₅)₂P(O)OCH₂CH₂CH₂Br, (4.710 g; 11.1 mmol) langsam zu gekühltem (0 °C) *N*-Methylimidazol (0.907 g; 11.0 mmol) zugetropft (exotherm). Es Die farblose, höher viskose und schwach getrübte Reaktionsmischung wird 1 h bei 0 °C und 3 h bei Raumtemperatur gerührt und im Vakuum (10⁻³ mbar) bei Raumtemperatur gereinigt. 1-(3-Brompropyl)-3-methylimidazoliumbis(pentafluorethyl)phosphinat, [BrCH₂CH₂CH₂MIM][(C₂F₅)₂P(O)O], (5.286 g; 10.5 mmol) kann als farblose, hoch viskose und schwach getrübte Flüssigkeit in 95 %-iger Ausbeute und 90 %-iger Reinheit isoliert werden.

Das isolierte Produkt wird mittels ¹H, ¹⁹F und ³¹P NMR-Spektren in CD₃CN charakterisiert.
¹H NMR: δ in ppm: 8.83 br.s (1 H); 7.50 d, m (1 H), ⁴*J*_{H,H} = 1.8 Hz; 7.44 d, m (1 H), ⁴*J*_{H,H} = 1.8 Hz; 4.32 t (2H), ³*J*_{H,H} = 7.0 Hz; 3.86 s (3H); 3.46 t (2H), ³*J*_{H,H} = 6.5 Hz; 2.40 quin (2H), ³*J*_{H,H} = 6.8 Hz.
¹⁹F NMR: δ in ppm: -81.4 m (6F); -126.1 d (4F), ²*J*_{F,P} = 66.3 Hz.
³¹P NMR: δ in ppm: -1.3 quin, m, ²*J*_{F,P} = 66.3 Hz.

### Elementaranalyse

Experimentell, %: N 6.03, C 25.84 und H 2.35;
berechnet für C₁₁H₁₂BrF₁₀N₂O₂P, %: N 5.55, C 23.16 und H 2.39

### Beispiel 34:

### Darstellung von Methyltriphenoxyphosphonium bis(pentafluorethyl)phosphinat, [(C₆H₅O)₃PCH₃][(C₂F₅)₂P(O)O]:

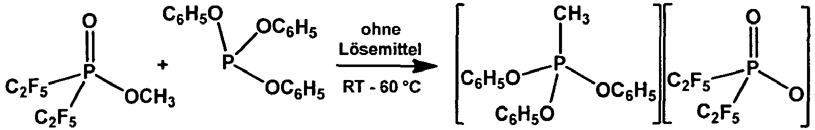

In einem 10 mL Glaskolben wird Bis(pentafluorethyl)phosphinsäuremethylester, (C₂F₅)₂P(O)OCH₃, (2.755 g; 8.7 mmol) bei Raumtemperatur zu Triphenylphosphit, P(OC₆H₅)₃, (2.075 g; 6.7 mmol) gegeben. Das zweiphasige Reaktionsgemisch wird erwärmt und 5.5 h bei 60 °C gerührt. Dabei bildet sich ein trübes und farbloses Reaktionsgemisch, dass 16 h bei RT und 5 h bei 60 °C gerührt wird. Es wird noch einmal Bis(pentafluorethyl)phosphinsäuremethylester, (C₂F₅)₂P(O)OCH₃, (0.380 g; 1.2 mmol) zugegeben und nochmals 5.5 h bei 60 °C gerührt. Durch Reinigung im Vakuum (10⁻³ mbar) bei 80 °C kann Methyltriphenoxyphosphoniumbis(pentafluorethyl)phosphinat, [(C₆H₅O)₃PCH₃][(C₂F₅)₂P(O)O], als weißer und kristalliner Feststoff (3.827 g; 6.1 mmol) in 91 %-iger Ausbeute und 89 %-iger Reinheit isoliert werden.

Das isolierte Produkt wird mittels ¹H, ¹⁹F und ³¹P NMR-Spektren in CD₃CN charakterisiert.
¹H NMR: δ in ppm: 7.56 t, m (6H), ³*J*_{H,H} = 7.8 Hz; 7.49 t, m (3H), ³*J*_{H,H} = 7.3 Hz; 7.35 d, m (6H), ³*J*_{H,H} = 7.8 Hz; 2.62 d (3H), ²*J*_{H,P} = 17.0 Hz.
¹⁹F NMR: δ in ppm: -81.4 m (6F); -126.1 d (4F), ²*J*_{F,P} = 72.6 Hz.
³¹P NMR: δ in ppm: 41.5 q (1P), ²*J*_{H,P} = 17.0 Hz; -1.1 quin, m (1P), ²*J*_{F,P} = 72.6 Hz.

### Elementaranalyse

Experimentell, %: C 43.45 und H 2.91;
berechnet für C₂₃H₁₈F₁₀O₅P₂, %: C 44.11 und H 2.90

### Beispiel 35:

### Darstellung von 2-Tris(pentafluorethyl)-1,3,2-dioxaphosphinan, (C₂F₅)₃P(O₂C₃H₆)

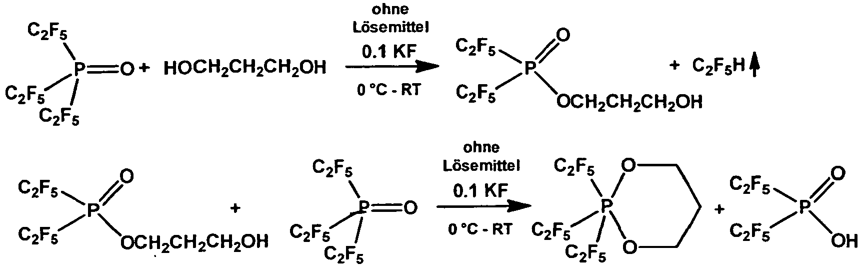

In einem 25 mL Kolben wird Kaliumfluorid (0.069 g; 1.2 mmol) in gekühltem (0 °C) Tris(pentafluorethyl)phosphinoxid, (C₂F₅)₃P=O, (4.131 g; 10.2 mmol) suspendiert und Propan-1,3-diol (0.800 g; 10.5 mmol) wird zugegeben. Die farblose Reaktionssuspension wird 1.5 h bei 0 °C und 48 h bei RT gerührt und anschließend im Vakuum bei RT kondensiert. Dabei wird 2-Tris(pentafluorethyl)-1,3,2-dioxaphosphinan durch Sublimation als farbloser Feststoff (0.708 g; 1.5 mmol) in 30 %-iger Ausbeute und 91 %-iger Reinheit isoliert.

Das isolierte Produkt wird mittels ¹H, ¹⁹F und ³¹P NMR-Spektren in CD₃CN charakterisiert.
1 H: 1.99 (m, 2H), 4.55 (m, 4H)
19F: -110.0 (dm, ²*J*(¹⁹F-³¹P) = 87.3 Hz, 6F), -79.2 (m, 9F)
31P: -54.1 (sepm, ²JC⁹F-³¹P) = 87.1 Hz, 1P)

### Elementaranalyse

Experimentell,%: C 23.39, H 1.31
berechnet für C₉H₆F₁₅O₂P, %: C 23.29, H 1.34

## Patentansprüche

1. Verfahren zur Herstellung von Phosphinsäureestem der Formel (I)
(CₙF₂ₙ+_{1-y}H_{y})₂P(O)OR (I),
wobei
n jeweils unabhängig voneinander 1, 2, 3, 4, 5, 6, 7, 8, 9, 10, 11 oder 12 bedeutet,
y jeweils unabhängig voneinander 0, 1, 2, 3 oder 4 bedeutet, R unsubstituiertes oder substituiertes Phenyl, eine geradkettige oder verzweigte, nicht-fluorierte oder teilfluorierte oder deuterierte Alkylgruppe mit 1 bis 30 C-Atomen oder eine geradkettige oder verzweigte, nicht-fluorierte oder teilfluorierte Alkenyl- oder Alkinylgruppe mit 3 bis 30 C-Atomen bedeutet, wobei R teilweise mit Halogen und/oder teilweise mit -OH, -C(O)OH, N(CH₃)₂ und -CN substituiert sein kann und wobei ein oder zwei nicht benachbarte und nicht zum Sauerstoffatom oder zu Kohlenstoffatomen der Doppelbindung oder Dreifachbindung α-ständige Kohlenstoffatome der Alkyl-, Alkenyl- oder Alkinylgruppe durch Atome und/oder Atomgruppierungen ausgewählt aus der Gruppe -O-, -S-, -S(O)-, -SO₂-, -C(O)-, -C(O)O- oder -N(R')- ersetzt sein können und R' jeweils unabhängig voneinander H, eine geradkettige oder verzweigte, nicht fluorierte oder teilweise-fluorierte Alkylgruppe mit 1 bis 18 C-Atomen, gesättigtes C₃- bis C₇-Cycloalkyl, unsubstituiertes oder substituiertes Phenyl bedeutet,
durch Reaktion eines Phosphinoxids der Formel (II)
(CₙF_{2n+1-y}H_{y})₃P(O) (II),
wobei n und y eine bei der Formel (I) angegebenen Bedeutungen haben, mit einem Alkohol oder Phenol R-OH in Gegenwart von Alkalimetallfluorid oder Tetraalkylammoniumfluorid, wobei R eine bei der Formel (I) angegebene Bedeutung hat, wobei der Gehalt an Wasser bei dieser Reaktion in Summe maximal 1000 ppm beträgt und wobei Alkyl in Tetraalkylammonium jeweils unabhängig voneinander eine geradkettige oder verzweigte Alkylgruppe mit 1 bis 10 C-Atomen bedeutet.

2. Verfahren nach Anspruch 1, **dadurch gekennzeichnet, dass** der Alkohol oder das Phenol einen Restwassergehalt zwischen 10 bis 1000 ppm hat.

3. Verfahren nach Anspruch 1 oder 2, **dadurch gekennzeichnet, dass** das Alkalimetallfluorid oder Tetraalkylammoniumfluorid einen Restwassergehalt zwischen 0 bis 990 ppm hat.

4. Verfahren nach einem oder mehreren der Ansprüche 1 bis 3, **dadurch gekennzeichnet, dass** das Alkalimetallfluorid oder Tetraalkylammoniumfluorid bei Temperaturen von -10°C bis 0°C dem Phosphinoxid der Formel (II) zugesetzt wird, der Alkohol oder das Phenol zugegeben wird und die Reaktionsmischung auf eine Temperatur von 20° bis 60°C bis zur vollständigen Umsetzung erwärmt wird.

5. Verfahren nach einem oder mehreren der Ansprüche 1 bis 4, **dadurch gekennzeichnet, dass** kein weiteres Lösungsmittel der Reaktion beigesetzt wird.

6. Verfahren nach einem oder mehreren der Ansprüche 1 bis 5, **dadurch gekennzeichnet, dass** die Variable y in den Verbindungen der Formel (I) und (II) 0, 1 oder 2 bedeutet.

7. Verfahren nach einem oder mehreren der Ansprüche 1 bis 6, **dadurch gekennzeichnet, dass** die Variable y in den Verbindungen der Formel (I) und (II) 0 bedeutet.

## Claims

1. Process for the preparation of phosphinic acid esters of the formula (I)
(CₙF_{2n+1-y}H_{y})₂P(O)OR (I),
where
n in each case, independently of one another, denotes 1, 2, 3, 4, 5, 6, 7, 8, 9, 10, 11 or 12,
y in each case, independently of one another, denotes 0, 1, 2, 3 or 4, R denotes unsubstituted or substituted phenyl, a straight-chain or branched, unfluorinated or partially fluorinated or deuterated alkyl group having 1 to 30 C atoms or a straight-chain or branched, unfluorinated or partially fluorinated alkenyl or alkynyl group having 3 to 30 C atoms, where R may be partially substituted by halogen and/or partially substituted by -OH, -C(O)OH, N(CH₃)₂ and -CN and where one or two carbon atoms of the alkyl, alkenyl or alkynyl group which are not adjacent and are not in the α-position to the oxygen atom or to carbon atoms of the double bond or triple bond may be replaced by atoms and/or atom groups selected from the group -O-, -S-, -S(O)-, -SO₂-, -C(O)-, -C(O)O-or -N(R')- and
R' in each case, independently of one another, denotes H, a straight-chain or branched, unfluorinated or partially fluorinated alkyl group having 1 to 18 C atoms, saturated C₃- to C₇-cycloalkyl, unsubstituted or substituted phenyl,
by reaction of a phosphine oxide of the formula (II)
(CₙF_{2n+1-y}H_{y})₃P(O) (II),
where n and y have a meaning indicated in the case of the formula (I), with an alcohol or phenol R-OH in the presence of alkali-metal fluoride or tetraalkylammonium fluoride, where R has a meaning indicated in the case of the formula (I), where the water content in this reaction is in total a maximum of 1000 ppm and where alkyl in tetraalkylammonium in each case, independently of one another, denotes a straight-chain or branched alkyl group having 1 to 10 C atoms.

2. Process according to Claim 1, **characterised in that** the alcohol or phenol has a residual water content between 10 and 1000 ppm.

3. Process according to Claim 1 or 2, **characterised in that** the alkali-metal fluoride or tetraalkylammonium fluoride has a residual water content between 0 and 990 ppm.

4. Process according to one or more of Claims 1 to 3, **characterised in that** the alkali-metal fluoride or tetraalkylammonium fluoride is added to the phosphine oxide of the formula (II) at temperatures of -10°C to 0°C, the alcohol or phenol is added, and the reaction mixture is warmed at a temperature of 20°C to 60°C until the reaction is complete.

5. Process according to one or more of Claims 1 to 4, **characterised in that** no further solvent is added to the reaction.

6. Process according to one or more of Claims 1 to 5, **characterised in that** the variable y in the compounds of the formulae (I) and (II) denotes 0, 1 or 2.

7. Process according to one or more of Claims 1 to 6, **characterised in that** the variable y in the compounds of the formulae (I) and (II) denotes 0.

## Revendications

1. Procédé pour la préparation d'esters d'acide phosphinique de la formule (I) :
(CₙF_{2n+1-y}H_{y})₂P(O)OR (I)
dans laquelle :
n représente, dans chaque cas, indépendamment des autres, 1, 2, 3, 4, 5, 6, 7, 8, 9, 10, 11 ou 12,
y représente, dans chaque cas, indépendamment des autres, 0, 1, 2, 3 ou 4,
R représente phényle non substitué ou substitué, un groupe alkyle non fluoré ou partiellement fluoré ou deutératé en chaîne droite ou ramifié comportant 1 à 30 atomes de C ou un groupe alkényle ou alkynyle non fluoré ou partiellement fluoré en chaîne droite ou ramifié comportant 3 à 30 atomes de C, où R peut être partiellement substitué par halogène et/ou partiellement substitué par -OH, -C(O)OH, N(CH₃)₂ et -CN et où un ou deux atomes de carbone des groupes alkyle, alkényle ou alkynyle qui ne sont pas adjacents et qui ne sont pas à la position α par rapport à un atome d'oxygène ou par rapport à des atomes de carbone de la liaison double ou de la liaison triple peut/peuvent être remplacés par des atomes et/ou des groupes d'atomes choisis parmi le groupe -O-, -S-, -S(O)-, -SO₂-, -C(O)-, -C(O)O- ou -N(R')- et
R' représente, dans chaque cas, indépendamment des autres, H, un groupe alkyle non fluoré ou partiellement fluoré en chaîne droite ou ramifié comportant 1 à 18 atomes de C, C₃- à C₇-cycloalkyle saturé, phényle non substitué ou substitué,
par réaction d'un oxyde de phosphine de la formule (II) :
(CₙF_{2n+1-y}H_{y})₃P(O) (II)
où n et y présentent une signification indiquée dans le cas de la formule (I), avec un alcool ou un phénol R-OH en présence de fluorure de métal alcalin ou de fluorure de tétraalkylammonium, où R présente une signification indiquée dans le cas de la formule (I), où la teneur en eau au niveau de cette réaction est au total un maximum de 1000 ppm et où alkyle dans tétraalkylammonium, dans chaque cas, indépendamment des autres, représente un groupe alkyle en chaîne droite ou ramifié comportant 1 à 10 atomes de C.

2. Procédé selon la revendication 1, **caractérisé en ce que** l'alcool ou le phénol présente une teneur en eau résiduelle entre 10 et 1000 ppm.

3. Procédé selon la revendication 1 ou 2, **caractérisé en ce que** le fluorure de métal alcalin ou le fluorure de tétraalkylammonium présente une teneur en eau résiduelle entre 0 and 990 ppm.

4. Procédé selon une ou plusieurs des revendications 1 à 3, **caractérisé en ce que** le fluorure de métal alcalin ou le fluorure de tétraalkylammonium est ajouté à l'oxyde de phosphine de la formule (II) à des températures de -10°C à 0°C, l'alcool ou le phénol est ajouté, et le mélange de réaction est chauffé à une température de 20°C à 60°C jusqu'à ce que la réaction soit terminée.

5. Procédé selon une ou plusieurs des revendications 1 à 4, **caractérisé en ce qu'**aucun autre solvant n'est ajouté à la réaction.

6. Procédé selon une ou plusieurs des revendications 1 à 5, **caractérisé en ce que** la variable y dans les composés des formules (I) et (II) représente 0, 1 ou 2.

7. Procédé selon une ou plusieurs des revendications 1 à 6, **caractérisé en ce que** la variable y dans les composés des formules (I) et (II) représente 0.
